(19) Europäisches Patentamt
European Patent Office
Office européen des brevets

(11) **EP 4 497 494 A1**

(12) **EUROPEAN PATENT APPLICATION**


(43) Date of publication:
**29.01.2025 Bulletin 2025/05**

(21) Application number: **23187344.9**

(22) Date of filing: **24.07.2023**

(51) International Patent Classification (IPC):
***B01D 67/00*** *(2006.01)* ***B01D 69/02*** *(2006.01)*
***B01D 69/08*** *(2006.01)* ***B01D 69/14*** *(2006.01)*
***B01D 71/28*** *(2006.01)* ***B01D 71/40*** *(2006.01)*
***B01D 71/68*** *(2006.01)*

(52) Cooperative Patent Classification (CPC):
**B01D 69/02; B01D 67/0011; B01D 67/00111; B01D 67/00931; B01D 69/08; B01D 69/144; B01D 71/281; B01D 71/403; B01D 71/68;**
B01D 67/00165; B01D 71/44; B01D 2323/2187; B01D 2323/36; B01D 2323/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicants:
- **Gambro Lundia AB**
  **220 10 Lund (SE)**
- **Rheinisch-Westfälische Technische Hochschule (RWTH) Aachen**
  **52062 Aachen (DE)**
- **DWI - Leibniz-Institut für Interaktive Materialien e.V.**
  **52074 Aachen (DE)**
- **Leibniz-Institut für Polymerforschung Dresden e.V.**
  **01069 Dresden (DE)**

(72) Inventors:
- **HELMECKE, Tina**
  **01705 Freital (DE)**
- **ROSE, Ilka**
  **52074 Aachen (DE)**
- **TSURKAN, Mikhail**
  **01217 Dresden (DE)**
- **ROTH, Hannah**
  **52074 Aachen (DE)**
- **MAITZ, Manfred**
  **01097 Dresden (DE)**
- **WERNER, Carsten**
  **01324 Dresden (DE)**
- **MENDA, Ralf**
  **89250 SENDEN (DE)**
- **REMPFER, Martin**
  **72810 Gomaringen (DE)**
- **WESSLING, Matthias**
  **52074 Aachen (DE)**

(74) Representative: **Hornung, Veronika Margot**
**Gambro Dialysatoren GmbH**
**Holger-Crafoord-Strasse 26**
**72379 Hechingen (DE)**


(54) **SMA-BLENDED MEMBRANES FOR IMMOBILIZING FUNCTIONAL MOLECULES**


(57) The present disclosure relates to polysulfone, polyethersulfone or polyarylethersulfone based membranes for use in extracorporeal blood treatment applications comprising a blend of (i) a polysulfone (PS), a polyethersulfone (PES) or a polyarylethersulfone (PAES); (ii) a polyvinylpyrrolidone (PVP); and (iii) a poly(styrene-alt-maleic anhydride)-copolymer which are configured for the immobilization of amine-bearing functional molecules on the surface of the membrane. The disclosure further relates to a method for producing the membranes and a filtration and/or diffusion device comprising the membrane.


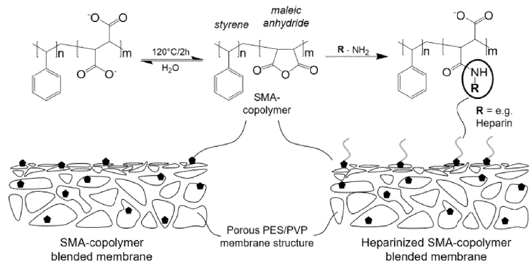


Figure 2

EP 4 497 494 A1

## Description

### Technical Field

The present disclosure relates to membranes for use in extracorporeal blood treatment which are configured for the immobilization of amine-bearing functional molecules on the surface of the membrane. The disclosure further relates to a method for producing the functionalized membranes, a filtration and/or diffusion device comprising the membrane, and methods of using the membranes and filtration and/or diffusion devices in extracorporeal blood treatment applications.

### Background of the Invention

Membranes have worldwide applications in various areas such as water treatment, pharmaceutical, medical, and food industries, and medical technologies, due to their specific properties of permeability, selectivity, or surface characteristics. Surface modifications after membrane fabrication equip the membrane with additional properties. For example, the fouling behavior is improved (Zhai et al. (2020): Fouling resistance of 3- [[3-(trimethoxysilane)-propyl] amino] propane-1-sulfonic acid zwitterion modified poly (vinylidene fluoride) membranes. Separation and Purification Technology 239, 11658) or nanofiltration characteristics are obtained (Menne et al. (2016): Regenerable polymer/ceramic hybrid nanofiltration membrane based on polyelectrolyte assembly by layer-by-layer technique. Journal of Membrane Science 520, 924-932). However, these subsequent surface functionalizations often require time-consuming multistep layer-by-layer coating procedures.

This contrasts the current trend to the ’chemistry in-a-spinneret’ technology, which fabricates functionalized membrane surfaces in a single step process. Here, the basic functionalization of the membrane surface is a direct result of the membrane fabrication process. During the precipitation, cross-linkers and/or additives provided in the polymer solution react with the membrane material or a further additive (Kopeć et al. (2011): Chemistry in a spinneret - on the interplay of crosslinking and phase inversion during spinning of novel hollow fiber membranes. Journal of membrane science 369 (1-2), 308-318). Thus, membranes are fabricated and functionalized simultaneously. Various research projects have already shown that this process can be used in a variety of ways to tailor the properties (Emonds et al. (2020) : Chemistry in a spinneret-formation of hollow fiber membranes 618 with a cross-linked polyelectrolyte separation layer. Journal of Membrane Science 612, 118325; Rose et al. (2022): Chemistry in a spinneret - polydopamine functionalized hollow fiber membranes. Journal of Membrane Science 648, 120324).

A further possibility to modify membrane surface properties is the blending of additives into the polymer solution without a reaction during membrane fabrication (Susanto et al. (2020): Preparation of low-fouling polyethersulfone ultrafiltration membranes by incorporating high-molecular-weight chitosan with the help of a surfactant. South African Journal of Chemical Engineering 33, 133-140; Rose et al. (2022): Single-step chitosan functionalized membranes for heparinization. Journal of Membrane Science 655, 120567). Susanto et al. (2020) and Rose et al. (2022), for example, describe blending chitosan into a polyethersulfone (PES) polymer solution and fabricated membranes which showed an influence on the fouling behavior. Furthermore, Rose et al. (2022) subsequently adsorbed heparin to the chitosan-blended membrane, which increased significantly the hemocompatibility of the membrane. Athira et al. (2020): Preparation and characterization of porous polyethersulfone (pes) membranes with improved biocompatibility by blending sulfonated polyethersulfone (SPES) and cellulose acetate (CA) - a comparative study. Materials Today Communications 25, 101544, improved the biocompatibility of the base membrane surface by blending sulfonated PES or cellulose acetate into a PES polymer solution.

Various approaches using maleic anhydride-containing copolymers to equip materials with increased biocompatibility and specific bioactivity were described previously. Thin films of poly(octadecene maleic anhydride), poly-(propylene maleic anhydride), poly(styrene maleic anhydride), and polyethylene maleic anhydride) with graded hydrophilicity have been suggested as a platform for surface bioengineering, using the reactivity of the maleic anhydride groups with primary amines there for covalent surface functionalization. Anchor polymers of poly(styrene maleic anhydride) (SMA) recently have been formed by conjugation of amino-terminated poly(ethylene glycol) to the maleic anhydride group; the hydrophobic styrene group of the SMAnh adsorbs by hydrophobic interaction with high affinity to various polymer surfaces, providing a tool for surface modification (Ruland et al. (2021): Amphiphilic copolymers for versatile, facile, and in situ tunable surface biofunctionalization, Adv. Mater. 33(42), e2102489). Maleic anhydride copolymers have technical advantages of high mechanical and thermal stability, but the reactive maleic anhydride group is prone to hydrolysis and loses its reactivity. However, this is reversible by thermal treatment directly prior polymer functionalization, as depicted in **Figure 2.**

Finally, blending of SMA-copolymers was already successfully described for nano- and ultrafiltration membranes, thereby providing superior properties as reduced anti-fouling behavior (Mahdavi et al. (2016): An efficient nanofiltration membrane based on blending of polyethersulfone with modified (styrene/maleic anhydride) copolymer,

Journal of the Iranian Chemical Society 13(5), 873-880; Dong et al. (2022): Tailoring the dual role of styrene-maleic anhydride copolymer in the fabrication of polysulfone ultrafiltration membranes: Acting as a pore former and amphiphilic surface modifier. Separation and Purification Technology 283, 120219; Chen et al. (2021): Enhanced performances of chlorinated polyvinyl chloride (CPVC) ultrafiltration membranes by styrene-maleic anhydride copolymer. Separation and Purification Technology 258, 118043).

Membranes which are routinely used in extracorporeal blood purification applications such as hemodialysis (HD) or continuous renal replacement therapy (CRRT) are generally not specifically functionalized. Substances, such as uremic toxins, are primarily removed from blood based on size-exclusion principles determined by the pore-size and the pore-size distribution of the membrane but are otherwise not selective as regards which molecules of a given size are finally removed, either by adsorption or diffusion. Adsorption processes, wherein blood components adhere to the membrane surface, driven, for example, by the membrane's hydrophobicity and/or charge also contribute to the specific performance of a membrane but are unspecific and may work in both directions of being beneficial or unwanted (Bonomini et al. (2022): Biocompatibility of Surface-Modified Membranes for Chronic Hemodialysis Therapy. Biomedicines 10, 844).

Phenomena that are today addressed, in some cases, by modifying a membrane for use in extracorporeal blood purification mostly relate to issues of hemocompatibility and antithrombogenicity which is triggered by the contact of the membrane with blood during therapy.

A variety of membranes have therefore been suggested which in addition to the basic components of the membrane, such as, for example, polysulfone, polyethersulfone, or poly(aryl)ethersulfone in combination with PVP (polyvinylpyrrolidone) contain additives which are directly added to polymer solutions used for spinning or are coated after the spinning process with compounds for improving their properties, similar to what has been mentioned above. Examples for surface-modifying molecules targeting hemocompatibility are, for example, the Endexo (Interface Biologics) fluoro-oligomeric additives. They provide for a passive surface modification which has the potential to reduce platelet adhesion and activation. Currently, Endexo additives are used, for example, in the Optiflux Enexa dialyzer (Fresenius Medical Care). Vitamins, such as vitamin E, are also added to hemodialysis membranes in an effort to improve the biocompatibility of the dialyzers. Examples for such dialysis membranes comprising vitamin E are ViE hemodialyzers (Asahi Kasei Medical) which provide for a coating with vitamin E, and FX CorAL dialyzers (Fresenius Medical Care), where vitamin E is added to the spinning solution in low amounts.

Heparin, for example, is also provided in combination with dialysis membranes. Heparin is an anticoagulant widely used in medicine, including in combination with dialysis either systemically or as a component of the dialyzer. It is a highly sulfonated and carboxylated polysaccharide, and compared to all known biological macromolecules, it has the highest negative charge density due to said sulfonate and carboxylate groups. The molecular weight (MW) ranges between 1,200 and 84 40,000 Da (Sefton and Gorbet (2020): Nonthrombogenic treatments and strategies. Biomaterials Science (Fourth Edition), Academic Press, 515-537). To avoid side effects of the systemically applied heparin, research is being conducted to immobilize heparin locally on the blood-contacting surface and maintain the anticoagulant activity directly where it is needed. Research focused on immobilizing heparin with different approaches on various materials to improve their bio- and hemocompatibility. The heparinization of surfaces can be achieved by covalent grafting (Shan et al. (2020): Recent advances in heparinization of polymeric membranes for enhanced continuous blood purification. Journal of Materials Chemistry B8(5), 878-894; Wang et al. (2017): Hemocompatibility and oxygenation performance of polysulfone membranes grafted with polyethylene glycol and heparin by plasma-induced surface modification. Journal of Biomedical Materials Research Part B: Applied Biomaterials 105 (7), 1737-174; Kaleekkal (2021): Heparin immobilized graphene oxide in polyetherimide membranes for hemodialysis with enhanced hemocompatibility and removal of uremic toxins. Journal of Membrane Science 623, 119068).

However, for the immobilization of heparin, heparin-binding molecules or base coatings are required to enable heparin immobilization to the membrane surface. For example, Drozd et al.(2022): Chitosan/heparin layer-by-layer coatings for improving thromboresistance of polyurethane. Surfaces and Interfaces 28, 101674, immobilized heparin using bovine serum albumin (BSA) onto polyurethane plates. The resulting plates increase the clotting time. Sperling et al. (2006): In vitro hemocompatibility of albumin-heparin multilayer coatings on polyethersulfone prepared by the layer-by-layer technique. Journal of Biomedical Materials Research Part A: An Official Journal of The Society for Biomaterials. The Japanese Society for Biomaterials, and The Australian Society for Biomaterials and the Korean Society for Biomaterials 76 (4), 681-689) used BSA to immobilize heparin onto PES membrane surfaces. Using the layer-by-layer technique, BSA-heparin multi-layers are coated onto the surface and improve the bio- and hemocompatibility compared to the untreated surface. Gao et al. (2014): Preparation and evaluation of heparin-immobilized poly(lactic acid) (PLA) membrane for hemodialysis. Journal of Membrane Science 452, 390-399, on the other hand, prepared polydopamine-coated polylactic acid membranes for subsequent heparin immobilization. Rose et al. (2022) also used polydopamine to immobilize heparin onto PES membranes for dialysis applications.

In the field of hemodialysis, heparin surface functionalization resulted in commercial products, such as the Evodial and Oxiris dialyzers (Baxter International Inc.) which can be used in various hemodialysis applications, including acute conditions such as sepsis and with vulnerable patients. Their HepRAN membrane is based on polyethyleneimine as

a functional linker for the ionic immobilization of heparin to an anionic membrane of a synthetic copolymer of sodium methallylsulfonate and acrylonitrile (Kessler et al. (2012): Heparin-grafted dialysis membrane allows minimal systemic anticoagulation in regular hemodialysis patients: A prospective proof-of-concept study. Hemodialysis International 17(2), 282-29).

While such coating methods based on ionic interaction of the polyanion heparin with positively charged surface groups are most commonly applied, their stability in physiological high ionic media can be limited due to ionic exchange on the surface, and/or their production is complex and costly. So far only a few attempts focused on a covalent membrane functionalization, e.g., covalent heparin functionalization of polysulfone membranes. In 1983, Hoffmann et al. (1983): A new method for covalent coupling of heparin and other glycosaminoglycans to substances containing primary amino groups. Carbohydrate Research 117, 328-331, and Larm et al. (1983): A new non-thrombogenic surface prepared by selective covalent binding of heparin via a modified reducing terminal residue. Biomaterials, Medical Devices, and Artificial Organs 11(2-3), 161-173, described a method for deaminative heparin cleavage by nitrous acid and the covalent end-point attachment of the resulting heparin fragments to surfaces containing primary amines. This technology is nowadays commercially distributed as CARMEDA BioActive Surface (CBAS Heparin Surface). Another commercial biomaterial coating is the Trillium Biosurface, in which heparin is covalently integrated into a passivating surface coating, closely mimicking the properties of the vascular endothelium. Both strategies are used for the heparinization of hollow fiber membrane oxygenators, resulting in comparable beneficial effects on circulating platelet count during cardiopulmonary bypass (Palanzo et al.: Effect of carmeda BioActive surface coating versus trillium biopassive surface coating of the oxygenator on circulating platelet count drop during cardiopulmonary bypass. Perfusion 16(4), 279-283). Therefore, strategies for the simple and stable covalent heparin attachment to biomaterials are of high interest.

It would also be desirable to provide membranes for use in extracorporeal blood treatment applications which are designed for the immobilization of biofunctional (herein referred to simply as "functional") molecules that may not or not only be directed to hemocompatibility and/or antithrombogenicity, but which allow for a more selective approach to blood treatment than it is currently the case. Such molecules, which can be biomolecules or small chemical compounds (drugs) could be immobilized on the membrane surface for selectively binding such biomolecule or functional molecule with the goal to remove it from the system and silence it, or, alternatively, stabilize and/or enforce its activity and impact in the blood stream by such binding. It may also be desirable to specifically address blood components by enzymatically breaking down or modifying them to reduce or block their unwanted activity and/or to make them accessible to removal by hemodialysis, or to enhance or modify their activity. The expression "selectivity" as used here mean that membranes can selectively address and alter specific target molecules, irrespective of their size or charge.

It now has been found that amine-bearing compounds with the potential to modify the performance, hemocompatibility, antithrombogenicity and/or selectivity can be effectively immobilized on already highly functional hemodialysis membranes based a blend of (i) a polysulfone (PS), a polyethersulfone (PES) or a polyarylethersulfone (PAES); (ii) a polyvinylpyrrolidone (PVP), if poly(styrene maleic anhydride)-copolymers ("SMAnh copolymer") are added to the polymer solution before spinning. The maleic anhydride group of single-step fabricated SMAnh copolymer blended membranes can be efficiently used as the anchorage point to immobilize amine-group bearing functional molecules for modifying the properties of PS, PES or PAES based membranes for use in extracorporeal blood treatment therapies. For example, it is envisioned that this approach allows for similar controlled heparinization as the CBAS technology, however without the requirement of surface activation under harsh conditions and for lower cost to make such devices broadly available to the patients in need.

SMAnh copolymer blended membranes as described herein provide for a platform technology for membrane functionalization. They offer the future opportunity for the binding of variable functional molecules with, for example, free amino groups, thereby opening up extracorporeal blood treatment to a wide range of applications. For instance, with the surface immobilization of enzymes the technology could provide a much faster and industrially applicable approach than established systems, such as, for example, urease immobilization to PES beads with carboxyl-group functionalities using EDC/NHS chemistry.

## Summary of the Invention

The present disclosure provides porous hollow fiber membranes and flat sheet membranes (herein collectively referred to as "membrane(s)") which are configured to covalently bind functional molecules bearing an amine-group to the membrane surface, wherein the membranes can be used in extracorporeal blood treatment applications. Membranes that can be configured accordingly preferably comprise a blend of i) a polysulfone, polyethersulfone, or polyarylethersulfone; ii) a polyvinylpyrrolidone; and iii) a poly(styrene maleic anhydride)-copolymer.

The present disclosure also provides a process for producing membranes being configured for the immobilization of amine-group bearing functional molecules or compounds on the surface of membranes comprising a blend of i) a polysulfone, polyethersulfone, or polyarylethersulfone; ii) a polyvinylpyrrolidone; and iii) a poly(styrene maleic anhydride)-copolymer. It further provides for methods to immobilize such functional molecules on the surface of said membranes.

The present disclosure further provides filtration and/or diffusion devices comprising the membranes which are configured for the immobilization of amine-group bearing molecules or compounds on the surface of membranes. The filtration and/or diffusion devices, e.g., hemodialyzers, can be used in the extracorporeal treatment of blood, e.g., in hemodialysis, hemodiafiltration, hemofiltration, or CRRT applications.

According to one embodiment of the present invention, the membrane comprises the poly(styrene maleic anhydride)-copolymer in an amount of from 0.01 to 1.2 wt.-%.

According to another embodiment of the present invention, the membrane comprises PVP in an amount of from 2.0 to 5.0 wt.-% PVP and from 95 to 98 wt.-% PES.

According to another embodiment of the present invention, the membrane further comprises an amine-group bearing molecule or compound which is covalently bound to the surface of the membrane.

According to another embodiment of the present invention, the amine-group bearing compound is aminated heparin.

According to another embodiment of the present invention, the membrane is prepared from a polymer solution which comprises from 10 to 15 wt.%, relative to the total weight of the polymer solution, of polysulfone, polyethersulfone or polyarylethersulfone; from 1 to 10 wt.%, relative to the total weight of the polymer solution, of polyvinylpyrrolidone; and from 0.03 to 1.5 wt-%, relative to the total weight of the solution, of poly(styrene maleic anhydride)-copolymer.

According to another embodiment of the present invention, the PVP consists of 20-40 wt.%, based on the total PVP, of a low molecular weight component having a molecular weight of less than 100,000 Da and 60-80 wt.%, based on the total PVP, of a high molecular weight component having a molecular weight of 100,000 Da or more.

According to another embodiment of the present invention, the membrane is a hollow fiber membrane or a flat sheet membrane.

According to yet another embodiment of the present invention, the process for preparing a porous hollow fiber membrane configured for the immobilization of amine groups on the surface of the membrane comprises the steps of

a) dissolving (i) at least one of polysulfone, polyethersulfone, or polyarylethersulfone, (ii) at least one polyvinylpyrrolidone, and (iii) at least one poly(styrene maleic anhydride)-copolymer to form a polymer solution;

b) extruding the polymer solution through an outer ring slit of a nozzle with two concentric openings into a precipitation bath; simultaneously

c) extruding a center fluid through the inner opening of the nozzle;

d) washing the membrane obtained; and optionally drying the membrane;

wherein the polymer solution comprises from 5 to 15 wt.-%, relative to the total weight of the polymer solution, of a polysulfone, polyethersulfone, or polyarylethersulfone, and from 3 to 10 wt.-%, relative to the total weight of the polymer solution, of a polyvinylpyrrolidone, and from 0.03 to 2.5 wt.-%, preferably from 0.03 to 2.0 wt-%, and more preferably from 0.03 to 1.5 wt.-% relative to the total weight of the solution, of a poly(styrene maleic an-hydride)-copolymer (SMAnh copolymer).

According to another embodiment of the present invention, the polymer solution for preparing the membrane according to the invention further comprises from 70 to 90 wt-%, relative to the total weight of the polymer solution NMP, and from 2 to 5 wt-%, relative to the total weight of the polymer solution, $H_2O$.

According to another embodiment of the present invention, the center fluid which is used in the process for preparing the membrane of the invention comprises from 40 to 60 wt.-% NMP and from 40 to 60 wt.-% $H_2O$.

According to yet another embodiment, the invention is directed at a method of functionalizing a membrane with a functional molecule on at least one surface of the membrane, comprising (a) providing a membrane comprising a blend of (i) a polysulfone (PS), a polyethersulfone (PES) or a polyarylethersulfone (PAES); (ii) a polyvinylpyrrolidone (PVP); and (iii) a poly(styrene maleic anhydride)-copolymer (SMAnh); and (b) subsequently covalently binding an amine-bearing compound to the at least one surface of the membrane.

According to yet another embodiment, the invention is directed at a functionalized membrane comprising a blend of (i) a polysulfone (PS), a polyethersulfone (PES) or a polyarylethersulfone (PAES); (ii) a polyvinylpyrrolidone (PVP); (iii) a poly(styrene maleic anhydride)-copolymer (SMAnh) and (iv) a functional molecule which is covalently bound to the maleic anhydride group of the SMAnh. In one embodiment, the functional molecule is an anticoagulant, such as aminated heparin. In another embodiment, the functional molecule is a protein. In a further embodiment, the functional molecule is a nucleic acid. In yet another embodiment, the functional molecule is a carbohydrate.

According to yet another embodiment, the invention is directed at a device comprising a bundle of hollow fibers prepared from hollow fiber membranes which are configured to immobilize amine-group bearing molecules as described above.

According to yet another embodiment, the invention is directed at a device comprising a bundle of hollow fibers prepared from hollow fiber membranes which are configured to immobilize amine-group bearing molecules as described above, wherein functional molecules are immobilized on at least one surface of the membrane. In one embodiment, the functional molecule is aminated heparin.

According to yet another embodiment, the invention is directed at a device comprising a bundle of hollow fibers prepared from hollow fiber membranes comprising a blend of (i) a polysulfone (PS), a polyethersulfone (PES) or a polyarylethersulfone (PAES); (ii) a polyvinylpyrrolidone (PVP); (iii) a poly(styrene maleic anhydride)-copolymer (SMAnh) and (iv) a functional molecule which is covalently bound to the maleic anhydride group of the SMAnh.

According to yet another embodiment, the membranes and devices disclosed herein are configured for use in extracorporeal blood treatment applications.

According to yet another embodiment, the invention is directed at using a membrane configured for the immobilization of amine-group bearing molecules for extracorporeal blood treatment.

**Brief Description of the Drawings**

**Figure 1** is a schematic representation of the functionalization of a membrane, such as, for example, a hemodialysis membrane, wherein a membrane is prepared in one step from a mixture of, (i) PES, PAES, or PPES, (ii) PVP, and (iii) SMAnh. The SMAnh blended membrane can be contacted with amine-group bearing molecules which are immobilized on the membrane surface, resulting in a functionalized membrane.

**Figure 2** is a schematic representation of a SMAnh copolymer (XIRAN SZ30010) blended membrane (here: a porous PES/PVP membrane) which is provided for subsequent immobilization of amine-bearing molecules, e.g., heparin, in this example. The SMAnh-copolymer comprises hydrophobic styrene units and reactive maleic anhydride groups. Hydrolyzed maleic acid groups can be reactivated by thermal treatment, thereby allowing a covalent binding especially to primary amines.

**Figure 3** shows the cross-section morphologies of flat sheet membranes with 0 to 0.5 wt.% blended SMAnh copolymer (XIRAN SZ30010) (FS-$0_{SMAnh}$, FS-$0.1_{SMAnh}$, FS-$0.2_{SMAnh}$, and FS-$0.5_{SMAnh}$). The polymer composition used for the preparation of the respective membranes is provided in **Table IB.**

**Figure 4** shows the results of fouling studies using fluorescent labeled BSA of the reference without SMAnh (FS-$0_{SMAnh}$) and SMAnh copolymer (XIRAN SZ30010) blended membranes FS-$0.05_{SMAnh}$ (0.05 wt.%), FS-$0.1_{SMAnh}$ (0.1 wt.%), FS-$0.2_{SMAnh}$ (0.2 wt.%), and FS-$0.5_{SMAnh}$ (0.5 wt.%).

**Figure 5** shows the results of stability tests with the help of 0.1 wt.% fluorescence labeled SMAnh copolymer (XIRAN SZ30010) blended in flat sheet membranes upon incubation in PBS, Tris-BSA buffer and citrate plasma over 11 days. (a) Fluorescence scanning images of FS-$0.1_{SMAnh}$-Atto647N in different media. (b) Quantitative analysis of surface fluorescence and calculation of the SMAnh copolymer (XIR_AN SZ30010) stability in the membrane after the initial wash-off phase of 1 day (mean ± SD of n=2).

**Figure 6** provides for data showing covalent attachment of $NH_2$-groups to the maleic anhydride moiety of the blended SMAnh copolymer (XIRAN SZ30010). **(A)** Flat sheet membranes coated with the amino-terminated AZ Dye 647-$NH_2$ were incubated in Tris-BSA buffer and TWEEN 20 over 7 days each. The residual surface fluorescence, indicating the grafted dye, was measured using fluorescence scanning. **(B)** Quantification of surface fluorescence on the flat sheet membranes after 1 day (d1), 2 days (d2) and 7 days (d7) in Tris-BSA buffer. **(C)** Calculation of label binding stability referred to d1/Tris-BSA, excluding the initial wash-off phase (d0 to d1). (mean ± SD of n=2)

**Figure 7** represents the immobilization of an aminated heparin to flat sheet membranes with blended SMAnh copolymer (XIRAN SZ30010) and measurement of the anticoagulant performance in comparison to a commercial reference ePTFE. (a) Heparin release during membrane equilibration. (b) Activity of the immobilized heparin determined by the catalysis of FIIa inhibition by ATIII. (mean ± SD of n≥3)

**Figure 8** shows the morphology of the hollow fiber membrane with HF-$0.1_{SMAnh}$: a) &b) cross-section, c) high resolution cross-section of the pore structure, d) high resolution cross-section of the lumen channel.

**Figure 9** shows zeta-potentials of HF-$0_{SMAnh}$ (□), HF-$0.1_{SMAnh}$ (◦), and HF-$0.1_{SMAnh}$HEP (•). (mean and range of n=4

measurements at each pH value)

**Figure 10** shows pure water permeance (PWP, black) and molecular weight cut-off (MWCO, grey) measurements of HF-$0_{SMAnh}$ (□), HF-$0.1_{SMAnh}$ (◦), and HF-$0.2_{SMAh}$ (Δ) with and without subsequent heparin coating (HEP, filled symbols). (mean and range of n=3 measurements)

**Figure 11** shows the measurement of the anticoagulant performance of the reference HF-$0_{SMAnh}$, the HF-$0.1_{SMAnh}$, and the HF-$0.1_{SMAnh}$HEP membrane functionalized with aminated heparin. (a) Unspecific heparin release during membrane equilibration. (b) Activity of the immobilized heparin determined by the catalysis of FIIa inhibition by ATIII. (mean ± SD of n≥3)

**Figure 12** shows scanning micrographs of SMAnh blended hollow fiber membranes. This exemplary hollow fiber membrane according to HF-MER 0524-1 (see **Table I** and **Example 2.1**) was prepared at temperatures of 54°C/51°C (spinneret/spinning shaft) and with a center solution NMP:$H_2O$ of 45.43%:54.57% w/w. **Figure 12A** shows a profile of the hollow fiber membrane, whereas **Figure 12B** a close-up cross-section through the membrane, where the overall structure of the membrane is visible. **Figures 12C** and **12D** represent further magnifications of the membrane wall, wherein the inner selective layer is visible. **Figure 12E** shows the inner selective layer of the membrane, **Figure 12F** shows the outer surface of the hollow fiber membrane.

## Detailed Description of the Invention

The present disclosure provides porous hollow fiber membrane and flat sheet membranes (both referred to collectively as "membranes", if not indicated otherwise) for use in extracorporeal blood treatment applications which are configured to covalently bind functional molecules bearing an amine-group to the membrane surface, wherein the membranes can be used in extracorporeal blood treatment applications. The membranes can be prepared in an efficient manner, both cost and process-wise, and provide access to an effective way of further functionalizing membranes with various molecules with an accessible amine-group, such as, for example, a free amino group, which can be found in variable biologically and medically interesting biofunctional molecules including proteins, carbohydrates and nucleic acids.

According to one embodiment, the membrane of the present disclosure is configured for immobilizing an amine-group bearing functional molecule on its surface. In one embodiment, the functional molecule is immobilized on the lumen surface of a hollow fiber membrane. In another embodiment, the functional molecule is immobilized on the outer surface of a hollow fiber membrane. In still another embodiment, the functional molecule is immobilized on the lumen surface, the outer surface, and the surface of the pore channels of a hollow fiber membrane.

The present disclosure therefore provides for a simple and efficient method for functionalizing membranes for improving their base performance, such as, for example, the membranes' hemocompatibility, antithrombogenicity, or selectivity, or for designing membranes for selective extracorporeal therapies, wherein the functional molecule to be immobilized on the membrane specifically and selectively binds, removes, inactivates or otherwise alters a target molecule present in a patient's blood stream. The method can be used for treating a chronic or acute disease of the patient or can otherwise address a critical temporary condition of a patient such as intoxication, poisoning, or exposure to medication generating side effects.

The expression "alter(s)" as used herein, refers to, for example, conformational changes which alter the surface properties and modulate the molecule's functionality, binding behaviors and/or catalytic effect, or the enzymatic modification of at least one target molecule making use of an immobilized enzymes' transferase, hydrolase, oxidoreductase or lyase activities. Depending on the nature and activity of the functional molecule, more than one target molecule can be addressed. For example, enzymes such as phosphatases catalyze a dephosphorylation reaction, wherein a phosphate group is removed from molecule(s) carrying such group.

As used herein, the expression "(bio-)functional molecules" means molecules which can be immobilized on the membrane of the present invention and broadly refers to molecules having the ability to react or interact with other molecules, such as, for example, molecules present in the blood of a patient and have the potential to influence the patient's biochemical status and physiology. Said reaction or interaction encompasses, for example, that the functional molecule binds, removes, inactivates or otherwise alters a target molecule or group of target molecules having similar characteristics and which are present in a patient's blood stream. Target molecules can be small chemical compounds, drugs (e.g., toxins), peptides, proteins, DNA, RNA, etc. Examples for functional molecules are drugs (small chemical substances that cause a change in an organism's physiology), carbohydrates, deoxyribonucleic acids (DNA), ribonucleic acids (RNA), peptides, proteins (including, for example, antibodies and enzymes), and derivatives thereof. Functional molecules in the context of the present invention further provide for at least one functional chemical group which is able to undergo characteristic reactions preferably with the SMAnh copolymer present in a membrane as disclosed herein, e.g.,

amine groups, including, primary, secondary and tertiary amines, wherein primary amines are especially relevant.

The expression "amine-group" as used herein refers to reactive functional groups having a basic nitrogen atom with a lone pair, such as, for example, $-NH_2$, $-NH_R$, or $NR_2$, wherein R is a hydrocarbon, and which typically react as nucleophiles in an organic reaction. Amine substituents are also referred to as "amino" groups. The expression "amine-group(s)" encompass primary, secondary and tertiary amines, wherein accessible primary amine-groups are specifically relevant.

Membranes that can be configured for the binding of amine-bearing functional molecules preferably comprise a blend of i) a polysulfone, polyethersulfone, or polyarylethersulfone; ii) a polyvinylpyrrolidone; and iii) a poly(styrene maleic anhydride)-copolymer (SMAnh copolymer), wherein the maleic anhydride group of SMAnh copolymer blended membranes can be used as the anchor point for the immobilization of functional molecules.

Poly(styrene maleic anhydride)-copolymer is herein referred to as "SMAnh" copolymer, or simply as "SMA" copolymer). It is synthesized by the copolymerization of styrene and maleic anhydride monomers, illustrated below for a 1:1 styrene-to-maleic anhydride/acid molar ratio.

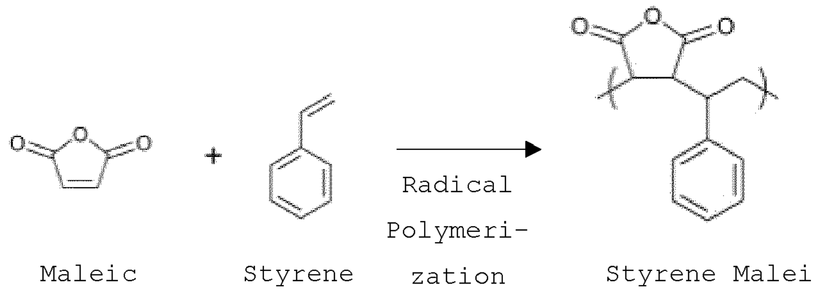


Maleic Anhydride    Styrene    Styrene Maleic Anhydride

Styrene can also be used in excess, leading to a more complex sequence distribution in the polymer. SMAnh copolymers can be obtained in different commercial grades that vary in styrene-maleic anhydride ratio and in average molecular weight, that can all be used for preparing membranes according to the invention. SMAnh copolymers can also be referred to as poly(styrene-co-maleic anhydride)-copolymers. Specific SMAnh copolymers, such as poly(styrene-alt-maleic anhydride) -copolymers are, however, fully encompassed by the present invention and can be used as described herein. It should be noted that even within a single preparation of SMAnh copolymer there are variations in molecular weight and in composition.

In one embodiment, SMAnh copolymers which can be used according to the invention have a molar percentage of maleic anhydride of from 20-50 mol-%. The molecular weight of SMAnh copolymer can vary broadly from about 5 kDa to 170 kDa. In one embodiment, a Mw range of from 5 kDa to 120 kDa is used according to the invention. In yet another embodiment, SMAnh copolymers as used herein have an average Mw of from 5 kDa to 80 kDa, or from 7 kDa to 50 kDa.

In one embodiment, SMAnh copolymer used according to the invention may consist of from 50% to 75% styrene, or from 65% to 75% styrene, such as, for example, of about 70% styrene. Commercially available SMAnh copolymers which can be used according to the invention without further modification are, for example, products from Polyscope Polymers B.V., Netherlands with the commercial name Xiran, such as Xiran SZ30010, a non-modified styrene-maleic anhydride copolymer with a ratio of styrene:maleic acid of 2:1, and which has a low average Mw (molecular weight) of 10 kDa, or Xiran SZ30030, having the same ratio of styrene and maleic acid as Xiran SZ30010, but with a higher average Mw of 30 kDa. Other examples are poly(styrene-co-maleic anhydride) with a styrene:maleic acid ratio of 3:1 and an average Mw of 80 kDa, and poly(styrene-co-maleic anhydride) with a styrene:maleic acid ratio of 3:1 and an average Mw of 120 kDa (all from Polyscope Polymers). They can also successfully be incorporated in membranes for configuring the membrane for binding amine-group bearing functional molecules as disclosed herein.

It is also relevant for the presently disclosed membrane, its preparation and use, that SMAnh has amphipathic properties due to the hydrophobic styrene units and the hydrophilic carboxyl/carboxylate ([COOH]/[COO-]) groups. The degree of hydrophobicity depends on the ratio of styrene and maleic acid units in the polymer itself, but also strongly on pH. This implies that at low pH, SMAnh essentially is non-charged, at neutral pH most of the maleic acid units will carry a single negative charge, and at high pH the maleic acid units will be charged at both carboxyl groups (Dörr et al. (2016). The styrene-maleic acid copolymer: a versatile tool in membrane research. Eur Biophys J. 45, 3-21).

Examples of suitable polysulfones include polysulfones having a weight average molecular weight $M_w$ (determined by GPC) of about 40,000 to 80,000 Da. In one embodiment, a polysulfone having a weight average molecular weight $M_w$ in the range of from 45 to 65 kDa is used. An example is a polysulfone having a weight average molecular weight $M_w$ of 52 kDa (determined by GPC) and a polydispersity $M_w/M_n$ of 3.5. Another example is a polysulfone having a weight average molecular weight $M_w$ of 60 kDa (determined by GPC) and a polydispersity $M_w/M_n$ of 3.7.

Examples of suitable polyethersulfones include polyethersulfones having a weight average molecular weight $M_w$ (determined by GPC) of about 40,000 to 100,000 Da. In one embodiment, a polyethersulfone having a weight average molecular weight $M_w$ in the range of from 50 to 60 kDa is used. An example is a polyethersulfone having a weight average molecular weight $M_w$ of 58 kDa (determined by GPC) and a polydispersity $M_w/M_n$ of 3.3. In another embodiment, a polyethersulfone having a weight average molecular weight $M_w$ in the range of from 65 to 80 kDa is used. An example is a polyethersulfone having a weight average molecular weight $M_w$ of 75 kDa (determined by GPC) and a polydispersity $M_w/M_n$ of 3.4. In yet another embodiment, a polyethersulfone having a weight average molecular weight $M_w$ in the range of from 80 to 100 kDa is used. An example is a polyethersulfone having a weight average molecular weight $M_w$ of 92 kDa (determined by GPC) and a polydispersity $M_w/M_n$ of 3.0.

Suitable polyvinylpyrrolidones include homopolymers of vinylpyrrolidone having a weight average molecular weight $M_w$ in the range of from 50 kDa to 2,000 kDa. These homopolymers generally have a number average molecular weight $M_n$ in the range of from 14 kDa to 375 kDa. Examples of suitable polyvinylpyrrolidones for preparing the membranes of the invention are Luvitec K30, Luvitec K85, Luvitec K90, and Luvitec K90HM, respectively, all available from BASF SE.

One embodiment of the hollow fiber membrane of the present invention comprises a polyvinylpyrrolidone homopolymer having a weight average molecular weight $M_w$ of about 1,100 kDa; and a number average molecular weight $M_n$ of about 250 kDa.

A further embodiment of the hollow fiber membrane of the present invention comprises a polyvinylpyrrolidone homopolymer having a weight average molecular weight $M_w$ of about 1,400 kDa; and a number average molecular weight $M_n$ of about 325 kDa.

The hollow fiber membrane of the present invention either has a symmetric wall structure or an asymmetric wall structure. In one embodiment, the membrane wall has a symmetric sponge structure. In another embodiment, the membrane wall has an asymmetric sponge structure, i.e., the size of the pores in the hollow fiber wall increases from the inner surface of the membrane towards the outer surface. In yet another embodiment of the process, the membrane wall has an asymmetric wall structure and comprises a layer having a finger structure, i.e., featuring macrovoids having a volume-equivalent diameter of more than 5 $\mu$m.

In one embodiment, the hollow fiber membrane of the present disclosure has an inner diameter of from 150 to 250 pm, for instance, from 180 to 250 $\mu$m. In another embodiment, the inner diameter is in the range of from 180 $\mu$m to 195 $\mu$m. In yet another embodiment, the inner diameter is in the range of from 195 $\mu$m to 205 pm. In still another embodiment, the inner diameter is in the range of from 210 $\mu$m to 220 $\mu$m.

In one embodiment, the wall thickness of the hollow fiber membrane according to the present invention is in the range of from 15 $\mu$m to 60 $\mu$m. In one embodiment, the wall thickness is 33 $\mu$m to 37 $\mu$m. In another embodiment, the wall thickness is 35 to 42 $\mu$m. In still another embodiment, the wall thickness is 43 $\mu$m to 47 $\mu$m. In yet another embodiment, the wall thickness is 48 $\mu$m to 52 $\mu$m.

In one embodiment, the membrane has sieving coefficients, measured according to EN 1283 at 37°C in bovine plasma having a protein content of 60 g/l, for vitamin $B_{12}$ of 1.0, for inulin of 1.0, for $\beta_2$-microglobulin of at least 0.7, and for albumin of less than 0.01.

The membrane of the invention may fall into different categories of membranes, that are referred to as either low-flux, high-flux, medium cut-off, or high cut-off membranes, depending on the intended therapeutic use. In one embodiment, the membrane according to the present invention is a high-flux membrane having a molecular weight retention onset (MWRO) of from 5 kDa to 10 kDa, and a molecular weight cut-off (MWCO) in whole blood in the range of from 25 kDa to 65 kDa. In a further embodiment, the average pore radius in the selective layer of the membrane is in the range of from 3.5 nm to 5.5 nm. Exemplary high-flux membranes and their properties and production are described, for example, in EP2113298B1, and in Table II of Boschetti et al. (2013): Extended characterization of a new class of membranes for blood purification: The high cut-off membranes. Int J Artif Organs 36 (7), 455-463. The membranes and filters according to the present invention may be prepared based on such known membranes that are modified with SMAnh copolymer as described herein.

In another embodiment, the membrane according to the present invention is a high cut-off membrane having a molecular weight retention onset of from 15 kDa to 20 kDa, and a molecular weight cut-off (MWCO) in whole blood in the range of from 170 kDa to 320 kDa. In a further embodiment, the average pore radius in the selective layer of the membrane is in the range of from 8.0 nm to 12.0 nm. High cut-off membranes and how they can be prepared are further described, for example, in US10238785B2. Membranes according to the invention can be derived therefrom when taking into consideration the present disclosure. Membranes and filters according to the invention which are designed to be high cut-off membranes may be especially useful in acute therapeutic treatment modalities, wherein endogenous or exogenous toxins having an immediate and detrimental impact on a patient's health are removed or altered and/or wherein vital organs are temporarily being supported, expressly including primarily non-renal diseases, such as, for example, sepsis, pre-eclampsia, multiple myeloma, aHUS and others.

In another embodiment, the membrane according to the present invention is a medium cut-off membrane having a molecular retention onset (MWRO) of between 9.0 kDa and 14.0 kDa and a molecular weight cut-off (MWCO) of between

55 kDa and 130 kDa as determined by dextran sieving before blood contact. In yet another embodiment, the membrane according to the present invention has a molecular retention onset (MWRO) of between 8.5 kDa and 12.5 kDa and a molecular weight cut-off (MWCO) of between 55 kDa and 90 kDa as determined by dextran sieving before blood contact. In yet another embodiment, the membrane according to the present invention has a molecular retention onset (MWRO) of between 10.0 kDa and 12.5 kDa and a molecular weight cut-off (MWCO) of between 68 kDa and 110 kDa as determined by dextran sieving before blood contact. In yet another embodiment, the membrane according to the present invention has an average pore radius in the selective layer of the membrane in the range of from 5.5 to 8.0 nm. Medium cut-off membranes, their properties and production, and filters comprising such medium cut-off membranes are described in EP3102314A1 and EP3102312A1. Membranes according to the invention can be derived therefrom when taking into consideration the present disclosure. Medium cut-off membranes may be especially useful because they can effectively be used in chronic and acute therapies that are envisioned here. Such therapies include, for example, chronic applications, when patients are receiving hemodialysis 2 to 4 times per week for 2 to 5 hours, extracorporeal membrane oxygenation (ECMO), continuous renal replacement therapy (CRRT), use of ventricular assist devices. In this regard, membranes and devices as described herein could effectively be functionalized for improved hemocompatibility and/or antithrombogenicity. Said device would be highly valuable also in selective extracorporeal blood treatment applications in which patients are treated with a specifically functionalized membrane/device according to the invention wherein a functional molecule is immobilized on the membrane and specifically and selectively binds, removes, inactivates or otherwise alters at least one target molecule present in a patient's blood stream for treating a disease or otherwise address an unwanted condition of a patient.

Accordingly, the present disclosure is directed, in one embodiment, to membranes configured for the immobilization of amine-group bearing compounds on the surface of the membrane, wherein the membrane comprises a blend of (i) a polysulfone (PS), a polyethersulfone (PES) or a polyarylethersulfone (PAES); (ii) a polyvinylpyrrolidone (PVP); and (iii) a poly(styrene maleic anhydride)-copolymer, and wherein the membrane has a molecular retention onset (MWRO) of between 9.0 kDa and 14.0 kDa and a molecular weight cut-off (MWCO) of between 55 kDa and 130 kDa as determined by dextran sieving before blood contact. In yet another embodiment, said membrane has a molecular retention onset (MWRO) of between 8.5 kDa and 12.5 kDa and a molecular weight cut-off (MWCO) of between 55 kDa and 90 kDa as determined by dextran sieving before blood contact.

The MWRO and MWCO parameters as used herein for describing membrane performance are based on dextran sieving experiments as described by Boschetti-de-Fierro et al. (2013) and refer to values obtained before blood contact of the membrane.

A potential application of the technology disclosed herein is the simple and efficient heparinization of the blood-contacting surface of dialysis hollow fiber membranes. As the system and method allows for a direct covalent attachment of an anticoagulant such as heparin to the membrane surface without additional functionalization steps, the approach is also promising regarding its ecological footprint and a time- and cost-efficient way to produce intrinsically antithrombogenic hemodialyzers. Thereby, the approach has the potential to increase accessibility of such superior hemodialyzers to a broader patient population.

According to one exemplary embodiment, the membrane of the present disclosure is used to immobilize an anticoagulant immobilized on its surface. In one embodiment, the anticoagulant is immobilized on the lumen surface of the hollow fiber membrane. In another embodiment, the anticoagulant is immobilized on the outer surface of the hollow fiber membrane. In still another embodiment, the anticoagulant is immobilized onto the lumen surface, the outer surface, and the surface of the pore channels of the hollow fiber membrane. The anticoagulant forms a covalent bond with the SMAnh copolymer doped membrane via an amine-group. The anticoagulant may comprise at least one compound of the glycosaminoglycan family with anticoagulation activity and is preferably selected from the group consisting of unfractionated heparin, fractionated heparin, heparin derivatives, and mixtures of said products. In one embodiment, unfractionated heparin is used. The surface concentration of the deposited anticoagulant usually is in the range of from 500 to 30,000 IU/$m^2$, e.g., in the range of from 500 to 10,000 IU/$m^2$, or in the range of from 500 to 5,000 IU/$m^2$. According to one embodiment, the heparin has an increased number of primary amines for coupling to the membrane surface via interaction with the SMAnh copolymer. Such heparin can be synthesized, for example, by fractional heparin N-deacetylation according to the protocol described in Wang et al. (2011): Control of the heparosan n-deacetylation leads to an improved bioengineered heparin. Applied Microbiology and Biotechnology 91(1), 91-99, with modifications, see also WO2012116048A1.

In one embodiment, the present invention is directed at a membrane comprising a blend of (i) a polysulfone (PS), a polyethersulfone (PES) or a polyarylethersulfone (PAES); (ii) a polyvinylpyrrolidone (PVP); (iii) a poly(styrene maleic anhydride)-copolymer (SMAnh copolymer); and (iv) heparin immobilized to at least one surface of the membrane. In one embodiment, said surface is the lumen surface of the membrane.

The present invention is also directed at devices, such as filters and hemodialyzers, comprising such heparinized membrane. The present invention is also directed at methods of using the membrane and/or device in extracorporeal blood treatment applications, including in hemodialysis treatments such as chronic hemodialysis (HD) or CRRT applications. The membrane and device provide for superior antithrombogenicity while avoiding systemic anticoagulation in a

patient undergoing such extracorporeal blood treatment. The membranes and devices of the invention provide for an increased safety for the patient due to the covalent binding of the anticoagulant to the membrane surface which significantly reduces or completely avoids any release (leaking) of the anticoagulant into the blood stream of the patient.

The manufacturing of membranes according to the present invention follows a phase inversion process, wherein a mixture of polymers is dissolved in a solvent to form a polymer solution. Due to the high solubility in NMP, the SMAnh-copolymer can directly be added during the preparation of the polymer solution in a concentration range of from 0.03 to 2.5 wt.-% without prior dissolution. The blending of SMAnh copolymer into the membrane structure thereby combines membrane production with SMAnh copolymer integration into the membrane structure in a single step. A time- and cost-intensive subsequent chemical or physical modification of the base membrane is therefore avoided. The polymer solution is degassed and filtered and is thereafter kept at an elevated temperature. Subsequently, the polymer solution is extruded through a spinning nozzle (for hollow fibers) or a slit nozzle (for a flat film) into a fluid bath containing a non-solvent for the polymer. The non-solvent replaces the solvent and thus the polymer is precipitated to an inverted solid phase. To prepare a hollow fiber membrane, the polymer solution preferably is extruded through an outer ring slit of a nozzle having two concentric openings. Simultaneously, a center fluid is extruded through an inner opening of the nozzle. At the outlet of the spinning nozzle, the center fluid comes in contact with the polymer solution and at this time the precipitation is initialized. The precipitation process is an exchange of the solvent from the polymer solution with the non-solvent of the center fluid. By means of this exchange the polymer solution inverses its phase from the fluid into a solid phase. In the solid phase the pore structure, i.e., asymmetry and the pore size distribution, is generated by the kinetics of the solvent/non-solvent exchange.

According to one embodiment, the membrane of the present invention comprises a blend of (i) a polysulfone (PS), a polyethersulfone (PES) or a polyarylethersulfone (PAES); (ii) a polyvinylpyrrolidone (PVP); and (iii) a poly(styrene maleic anhydride) copolymer (SMAnh copolymer).

According to another embodiment, the membrane comprises a blend of (i) a polysulfone (PS); (ii) a polyvinylpyrrolidone (PVP); and (iii) a poly(styrene maleic anhydride) copolymer (SMAnh copolymer). According to yet another embodiment, the membrane comprises (i) a polyethersulfone (PES); (ii) a polyvinylpyrrolidone (PVP); and (iii) a poly(styrene maleic anhydride)-copolymer (SMAnh).

According to one specific embodiment, the membrane comprises SMAnh copolymer in an amount of from 0.01 to 2.2 wt.-% based on the total weight of the membrane, such as, for example, from 0.01 to 2.0 wt.-%, from 0.01 to 1.8 wt.-%, from 0.01 to 1.6 wt.-%, from 0.01 to 1.4 wt.-%, from 0.01 to 1.3 wt.-%, from 0.01 to 1.1 wt.-%, from 0.01 to 1.0 wt.-%, from 0.01 to 0.9 wt.-%, from 0.01 to 0.8 wt.-%, from 0.01 to 0.7 wt.-%, from 0.01 to 0.6 wt.-%, from 0.03 to 1.1 wt.-%, from 0.03 to 1.0 wt.-%, from 0.03 to 0.9 wt.-%, from 0.03 to 0.8 wt.-%, from 0.03 to 0.7 wt.-%, from 0.03 to 0.6 wt.-%, from 0.03 to 0.5 wt.-%, from 0.03 to 0.4 wt.-%, from 0.03 to 0.6 wt.-%, from 0.03 to 0.5 wt.-%, from 0.05 to 0.9 wt.-%, from 0.05 to 0.8 wt.-%, from 0.05 to 0.7 wt.-%, from 0.05 to 0.6 wt.-%, from 0.05 to 0.5 wt.-%, from 0.05 to 0.9 wt.-%, from 0.07 to 0.9 wt.-%, from 0.07 to 0.8 wt.-%, from 0.07 to 0.7 wt.-%, from 0.07 to 0.6 wt.-%, from 0.07 to 0.5 wt.-%, from 0.1 to 0.9 wt.-%, from 0.1 to 0.8 wt.-%, from 0.1 to 0.7 wt.-%, from 0.1 to 0.6 wt.-%, or from 0.1 to 0.5 wt.-%.

According to another embodiment, the membrane of the invention comprises PVP in an amount of from 2.0 to 5.0 wt.-% of a PVP and from 95 to 98 wt.-% of a PES, PS, or PAES, based on the total weight of the membrane. For example, the membrane of the invention comprises from 2.0 to 4.5 wt.-% PVP, from 2.0 to 4.0 wt.-% PVP, from 2.5 to 5.0 wt.-% PVP, from 2.5 to 4.5 wt.-% PVP, from 2.5 to 4.0 wt.-% PVP, from 3.0 to 5.0 wt.-% PVP, or from 3.0 to 4.5 wt.-% PVP. For example, the membrane comprises from 96 to 98 wt.-%, from 97 to 98 wt.-%, from 95 to 97 wt.-%, or from 95 to 96 wt.-% of a PES, PS, or PAES.

According to yet another embodiment, the membrane of the invention comprises PVP which consists of 20-40 wt.%, based on the total PVP, of a low molecular weight component having a molecular weight less than 100,000 Da and 60-80 wt.%, based on the total PVP, of a high molecular weight component having a molecular weight of 100,000 Da or more.

The present disclosure also provides a filtration and/or diffusion device comprising a plurality of porous hollow fiber membranes of the present disclosure. The filtration and/or diffusion device is a device for the extracorporeal purification or treatment of blood, e.g., a hemodialyzer. The surface area of a device comprising the hollow fiber membranes of the present disclosure may vary but will usually be in a range of from 1.0 to 2.3 $m^2$. Membranes can be processed into hemodialyzers or blood treatment devices by methods generally known in the art, wherein the devices can be designed and optimized for a specific treatment or therapy, for example, with regard to housing, area, fiber and bundle geometry, packing density and flow characteristics, similar to or the same as products already available on the market such as, for example, Theranova or Revaclear (both from Baxter Int., Inc.).

Sterilization of the devices will normally be achieved by steam sterilization, e-beam sterilization, irradiation with gamma rays, or using ETO. In one embodiment, the device is sterilized with steam at 121°C for at least 20 minutes. In another embodiment, gamma radiation dose used is in the range of from 25 to 50 kGy, for instance, 25 kGy. In still another embodiment, the device is sterilized with e-beam treatment.

The present disclosure also provides the use of the hollow fiber membranes of the present disclosure in

hemodialysis, hemodiafiltration, or hemofiltration.

The present disclosure also provides for a process for producing a membrane which is configured for the immobilization of amine-group bearing compounds on the surface of the membrane, wherein the membrane comprises a blend of (i) a polysulfone (PS), a polyethersulfone (PES) or a polyarylethersulfone (PAES); (ii) a polyvinylpyrrolidone (PVP); and (iii) a poly(styrene maleic anhydride)-copolymer.

In one embodiment, the hollow fiber membrane of the invention is prepared by a continuous solvent phase inversion spinning process comprising the steps of

a) forming a polymer solution comprising at least one of polysulfone, polyethersulfone or polyarylethersulfone; at least one polyvinylpyrrolidone; and at least one poly(styrene maleic anhydride) copolymer;

b) extruding the polymer solution through an outer ring slit of a nozzle with two concentric openings into a precipitation bath; simultaneously

c) extruding a center fluid through the inner opening of the nozzle;

d) washing the membrane obtained; and optionally

e) drying the membrane;

wherein the polymer solution comprises from 10 to 15 wt.%, relative to the total weight of the polymer solution, of polysulfone, polyethersulfone or polyarylethersulfone; and from 1 to 10 wt.%, relative to the total weight of the polymer solution, of polyvinylpyrrolidone; and from 0.03 to 2.5 wt.%, relative to the total weight of the solution, of poly(styrene maleic anhydride) copolymer.

In one embodiment of the present disclosure, the polymer solution of step (a) is submitted to stirring for at least 24h at room temperature (RT) or at about 70°C for about 12h (overnight) before proceeding to step (b). In another embodiment of the invention, the polymer solution is degassed for about 12 hours (overnight) before spinning or casting into hollow fiber or flat sheet membranes.

In one embodiment of the present disclosure, the membrane in step (e) is dried by online-drying as described, for example, in US11154820B2.

In one embodiment, the present invention is directed at membranes configured for the immobilization of amine-group bearing compounds on the surface of the membrane, wherein the membrane is prepared from a polymer solution which comprises from 10 to 15 wt.%, relative to the total weight of the polymer solution, of polysulfone, polyethersulfone or polyarylethersulfone; from 1 to 10 wt.%, relative to the total weight of the polymer solution, of polyvinylpyrrolidone; and from 0.03 to 2.5 wt-%, relative to the total weight of the solution, of poly(styrene maleic anhydride)-copolymer.

The concentration of polyethersulfone, polysulfone, or polyarylethersulfone in the polymer solution generally is in the range of from 10 to 15 wt.%, for instance, from 12 to 14 wt. %.

In one embodiment of the process, the polymer solution comprises a polyethersulfone having a weight average molecular weight $M_w$ in the range of from 90 to 95 kDa. An example is a polyethersulfone having a weight average molecular weight $M_w$ of 92 kDa and a polydispersity $M_w/M_n$ of 3. In another embodiment, the polymer solution comprises a polyethersulfone having a weight average molecular weight $M_w$ in the range of from 70 to 80 kDa. An example is a polyethersulfone having a weight average molecular weight $M_w$ of 75 kDa and a polydispersity $M_w/M_n$ of 3.4.

The concentration of polyvinylpyrrolidone in the polymer solution generally is in the range of from 1 to 10 wt.%, e.g., from 2 to 8 wt.%.

In one embodiment of the process, the polymer solution comprises 1 to 5 wt.% of a polyvinylpyrrolidone having a weight average molecular weight $M_w$ of 1,100 kDa.

In another embodiment of the process, the polymer solution comprises 3 to 6 wt.% of a polyvinylpyrrolidone having a weight average molecular weight $M_w$ of 50 kDa.

In yet another embodiment of the invention, the polymer solution comprises from 70 to 85 wt.% NMP, such as, for example, from 72 to 80 wt.% of NMP. The amount of NMP varies in accordance with the amount of SMAnh which is present in the polymer solution.

In one embodiment, the poly(styrene maleic anhydride)-copolymer has a molar percentage of maleic anhydride of from 20-50 mol-%. In another embodiment, the molecular weight of poly(styrene maleic anhydride)-copolymer is in the range of from 5 kDa to 170 kDa. In yet another embodiment, the molecular weight of poly(styrene maleic anhydride)-copolymer is in the range of from 5 kDa to 120 kDa. In yet another embodiment, the molecular weight of poly(styrene maleic anhydride)-copolymer is in the range of from 5 kDa to 80 kDa, or from 7 kDa to 50 kDa.

In one embodiment, SMAnh copolymer used according to the invention herein may consist of from 50% to 80% styrene, from 50% to 75% styrene, from 65% to 75% styrene, or from 50% to 70% styrene such as, for example, of about

70% styrene. Commercially available SMAnh which can be used according to the invention are, for example, products from Polyscope Polymers B.V., Netherlands with the commercial name Xiran, such as Xiran SZ30010, a non-modified styrene-maleic anhydride copolymer with a ratio of styrene:maleic acid of 2:1, and which has a low average Mw (molecular weight) of 10 kDa, or Xiran SZ30030, having the same ratio of styrene and maleic acid as Xiran SZ30010, but with a higher average Mw of 30 kDa. Other examples are poly(styrene-co-maleic anhydride) with a styrene:maleic acid ratio of 3:1 and an average Mw of 80 kDa, and poly(styrene-co-maleic anhydride) with a styrene:maleic acid ratio of 3:1 and an average Mw of 120 kDa (all from Polyscope Polymers). However, other SMAnh copolymers having various ratios of styrene:maleic acid and a broader range of average molecular weight SMAnh can be used according to the invention, depending also on the intended amount SMAnh which is needed for the targeted application.

The viscosity of the polymer solution which is prepared for spinning the membrane of the invention can vary over a relatively broad range. For example, viscosities at 22°C will be in the range of from 3000 to 7000 mPas, such as for example, in the range of from 3500 to 6000 mPas, for polymer solutions according to the invention that can typically be used for the manufacture of dialysis membranes (see **Table IA**). It was found that the impact of SMAnh copolymers on the viscosity of the polymer solution is generally neglectable.

Membranes according to the invention can otherwise be prepared according to Rose et al. (2022): Chemistry in a spinneret-polydopamine functionalized hollow fiber membranes. Journal of Membrane Science 648, 120324.

In one embodiment, the polymer solution comprises from 1 to 4 wt.%, e.g., 2.0 to 4.0 wt.%, relative to the total weight of the solution, of water. In another embodiment, the polymer solution does not comprise added water.

In one embodiment of the process for preparing the membrane, the center fluid comprises 40 to 60 wt.% of water and 40 to 60 wt.% of NMP, for instance, 50 to 60 wt.% of water and 40 to 50 wt.% of NMP, or 52 to 55 wt.% of water and 45 to 48 wt.% of NMP, e.g., 54 wt.% of water and 46 wt.% of NMP, relative to the total weight of the center fluid. For example, the ration of NMP:$H_2O$ in the center fluid is 1:1.

In one embodiment of the process, the precipitation bath is comprised of water. In one embodiment of the process, the precipitation bath has a temperature in the range of from 10 to 70°C, for instance, from 15 to 25° or from 20 to 30°C, such as, for example, 25°C, or from 55 to 65°C, for example 60°C.

In one embodiment of the process for preparing the membrane, the temperature of the spinneret is in the range of from 42 to 64°C, e.g., from 52 to 60°C or from 53 to 55°C. In another embodiment of the process, the spinning shaft has a temperature of from 48°C to 55°C, for instance, from 50°C to 54°C or from 50°C to 52°C.

In one embodiment of the process, the distance between the opening of the nozzle and the precipitation bath is in the range of from 10 to 120 cm, e.g., from 90 to 110 cm (used, for example, for recipes according to **Table IA**). Depending on the equipment used, the air gap can be very different, such as only from 1 to 10 cm (used, for example, for recipes according to **Table IB**).

In one embodiment of the process, the spinning speed is in the range of from 20 to 80 m/min, e.g., from 30 to 50 m/min or from 40 to 50 m/min, such as, for example, about 43 to 47 m/min.

The membrane after spinning is washed to remove residual solvent and low molecular weight components. In a particular embodiment of a continuous process for producing the membrane, the membrane is guided through several water baths. In certain embodiments of the process, the individual water baths have different temperatures. For instance, each water bath may have a higher temperature than the preceding water bath, for example, the first bath may have a temperature of about 25°C, the second 60°C, and the consecutive baths may have temperatures of from 70°C to 75°C.

Subsequently, functional molecules can be immobilized on at least one surface of the membrane by covalent coupling of the functional molecules' amine-group, preferably a primary amino-group, to the maleic anhydride groups of the blended SMAnh copolymer present in the membrane of the invention. The immobilization or grafting can be performed before or after the membrane has been incorporated into a diffusion and/or filtration device.

In one embodiment, the surface whereon the functional molecules are coupled is the lumen surface of the membrane, i.e., its interior wall surface. In another embodiment, the surface is the outer surface of the membrane, i.e., its exterior wall surface. In still another embodiment, both the inner wall surface and the surface of the pore channels within the membrane are grafted with the functional molecule. In yet another embodiment, both the outer wall surface and the surface of the pore channels within the membrane are grafted with the functional molecule. In still another embodiment, the inner wall surface, the pore channels within the membrane, and the outer wall surface of the membrane are grafted with the functional molecule.

Accordingly, the present invention is directed to a functionalized membrane comprising a blend of (i) a polysulfone (PS), a polyethersulfone (PES) or a polyarylethersulfone (PAES); (ii) a polyvinylpyrrolidone (PVP); and (iii) a poly(styrene maleic anhydride) copolymer (SMAnh copolymer) and a functional molecule which is covalently bound to the maleic anhydride group of the SMAnh copolymer.

The present invention is also directed to a SMAnh copolymer blended membrane as disclosed herein, wherein a compound or functional molecule is grafted to at least one surface of the membrane by reaction of the maleic acid residues of the SMAnh with the at least one amine-group of the functional molecule.

In one embodiment, the covalent binding of functional molecules via their at least one amine-group, which in one

embodiment is a $NH_2$-group, is performed after reactivation of hydrolyzed maleic anhydride groups by tempering the SMAnh copolymer blended membrane at elevated temperatures for a certain period of time, which can range from 5 to 240 minutes. Typically, tempering will be performed for about 90 to 180 minutes. Temperatures can be in the range of from 90 °C to 140°C and will typically be in the range of from 110°C to 130°C. Grafting of the functional molecule is done immediately after such tempering. The membrane will be immersed or otherwise contacted with a solution of the functional molecule, wherein the solution will generally be an aqueous solution which can be buffered (e.g., Tris-BSA buffer), or which may be a physiological saline (0.9 NaCl), depending on the requirements of the functional molecule. Grafting can be performed over various periods of time but will usually be allowed to take place from about 10 minutes to 120 minutes. The functional molecule can be contained in excess for the grafting step. Generally, the functional molecule can be present in a broad range of concentrations depending on the specific requirements and on the content of SMAnh copolymer in the membrane. For example, the functional molecule can be present in a concentration of from 1 μM to 1 mM, such as for example, 10 μM to 500 μM. In a next step, the membrane will be washed one or several times with saline or a buffer, such as Tris-BSA-buffer at a neutral pH, such as from pH 7.0 to 7.8. Washing steps can be performed at room temperature but can also be performed at lower temperatures where the functional molecule is more sensitive to higher temperatures regarding conformational stability or degradation. In one embodiment, the grafted membranes are immersed in buffer or saline for several hours up to several days before further use.

By way of example, an anticoagulant can be grafted onto at least one surface of the membrane. In one embodiment, the anticoagulant comprises at least one member of the glycoaminoglycane family having anticoagulation activity. In a further embodiment, the anticoagulant is selected from the group consisting of unfractionated heparin, fractionated heparin, danaparoids, aminated heparin, heparin derivatives, and mixtures of said products. In one embodiment, aminated heparin is used. In one embodiment, the anticoagulant is unfractionated, aminated heparin. In one embodiment, the concentration of the anticoagulation agent on the membrane surface after the grafting step is in the range of from 1,000 to 30,000 IU/$m^2$, e.g., in the range of from 1,000 to 10,000 IU/$m^2$, or in the range of from 1,000 to 5,000 IU/$m^2$, for instance, from 1,500 to 3,500 IU/$m^2$.

The immobilization of the anticoagulant can be performed by contacting an aqueous solution or saline solution (0.9% NaCl) of the anticoagulant, such as aminated heparin, with the membrane surface. In one embodiment, the membrane before being contacted with the anticoagulant solution is tempered at elevated temperatures, such as, for example, from 100°C to 130°C, for example at 120°C for the reactivation of hydrolyzed maleic anhydride groups. In one embodiment, the membrane is flushed with an aqueous solution, e.g., 0.9% NaCl, of the anticoagulant and subsequently rinsed with water or saline such as 0.9%NaCl to remove excess anticoagulant. In yet another embodiment, the support membrane is flushed with an aqueous solution of the anticoagulant, optionally incubated 30 to 90 minutes, and subsequently dried to evaporate the solvent. In still another embodiment, the support membrane is soaked with an aqueous solution or saline such as 0.9% NaCl of the anticoagulant for a certain time, such as, from 30 to 90 minutes, making use of the capillary force generated by the hollow fiber.

The grafting can be performed before or after the membrane has been incorporated into a diffusion and/or filtration device. In other words, the grafting can also be performed on/in a diffusion and/or filtration device comprising the SMAnh copolymer blended hollow fiber membranes. For instance, a diffusion and/or filtration device, e.g., a hemodialyzer comprising a bundle of porous hollow fiber membrane can be flushed with an aqueous solution or saline solution (e.g., 0.9% NaCl) of the anticoagulant to perform the grafting; and subsequently the device is rinsed with water or saline solution (e.g., 0.9% NaCl) to remove excess anticoagulant. In another embodiment, the device is flushed with an aqueous solution of the anticoagulant to perform the grafting step; and subsequently the membranes in the device are dried and the solvent is evaporated. According to one embodiment, the anticoagulation solution comprises from 0.2 to 2 mg/mL anticoagulant, such as aminated heparin.

After the grafting, the membrane can be post-processed. Examples of post-processing include extensive rinsing of the membrane as mentioned above to remove loosely bound anticoagulant; drying of the membrane; cross-linking polymer chains of polymers present in the membrane by heating the membrane, etc.

The present disclosure thus provides a simple process for producing membranes which can be functionalized with a broad variety of functional molecules bearing an amine-group. Such functionalized membranes can be used in extracorporeal blood treatment applications, including standard hemodialysis, but also including selective extracorporeal therapies, wherein the membranes can be modified to selectively address relevant target molecules and associated diseases or critical conditions of a patient. For example, the presently disclosed membrane and devices comprising same, can be used in apheresis applications with whole blood, wherein the immobilized functional molecule can directly interact with the blood of a patient on the lumen side of a hollow fiber membrane.

An advantage of the membrane of the present disclosure is that no intermediate or priming layer between the base material and the anticoagulant coating is present, and the process for making the membrane does not require the additional steps for forming such a priming layer, such as specific coatings. The process of the present disclosure also does not involve an additional chemical reaction step for covalently coupling the anticoagulant to the membrane surface, such as a specific linker technology, and consequently does not involve the use of further costly and ecologically or clinically

critical coupling agents. The present disclosure provides a simple and scalable procedure for low-cost manufacturing of functionalized membranes, including heparinized, antithrombogenic hemodialyzers.

The subject matter of the present disclosure is further described in the following working examples. As will be understood, the following examples should not be interpreted as limiting the disclosure of the present invention, but as further illustrating the technology disclosed herein.

**Materials**

Membranes were prepared with polyethersulfone (PES) granulate (Ultrason 6020P, BASF, Germany); polyvinylpyrrolidone K30 (PVP K30) with an average molecular weight (MW) of 40 kDa (Carl Roth, Germany) or polyvinylpyrrolidone K30 (Luvitech K30) with an average molecular weight (MW) of 50 kDa; polyvinylpyrrolidone K85 (Luvitech K85, BASF, Germany) with an average molecular weight (MW) of 1100 kDa; N-methyl-2-pyrrolidone (NMP) (99 % from Fisher Scientific, Germany, or from BASF, Germany). For membrane blending, the poly(styrene maleic anhydride)-copolymers XIR_AN SZ30010 (MW 10 kDa, ratio of styrene:maleic acid 2:1)and Xiran SZ30030 (MW 30 kDa, ratio of styrene:maleic acid 2:1) were provided by Polyscope Polymers B.V., Netherlands.

For the synthesis of a fluorescence labeled SMAnh copolymer version, Atto647N amine was purchased from Atto-TEC GmbH, Germany. For surface heparinization, unfractionated heparin (Smithfield Bioscience, USA) was used. For the synthesis of aminated heparin by fractional N-deacetylation, NaOH, HCl and a 2 kDa molecular weight cut-off (MWCO) cellulose membrane were obtained from Sigma-Aldrich, Germany. For membrane coating with aminated heparin, 0.9 % NaCl solution was purchased from B. Braun, Germany.

For surface characterization, ≥96 % bovine serum albumin (BSA) and ≥99 % fluorescence labeled albumin-fluorescein isothiocyanate conjugate were purchased from Sigma Aldrich, Germany. Phosphate-buffered saline (PBS) tablets (ROTI® Fair PBS 7.4) were obtained from Carl Roth, Germany. For hollow fiber membrane characterization, polyethylene glycols (PEG) and polyethylene oxide (PEO) with different MWs from Carl Roth were purchased: PEG 600, PEG 2000, PEG 4000, PEG 6000, PEG 10000, PEG 20000, PEG 158 35000, and PEO 100000.

For polymer stability measurements and proof-of-concept for covalent $NH_2$-binding, Tris(hydroxymethyl)aminomethane (Trizma-Base, ≥99.9 %), PBS tablets (both Sigma Aldrich, Germany) and sodium chloride (NaCl, Honeywell Fluka, USA) were used. Citrate plasma was obtained from Haema AG, Germany, AZ Dye 647-NH2 from Fluoroprobes, USA and TWEEN 20 from Sigma-Aldrich, Germany. For anticoagulant activity measurements, Chromogenix COAMATIC Heparin test kit for anti-FXa activity measurement, chromogenic substrate S-2238 (both Chromogenix, Italy) and standard unfractionated heparin (Merck, Germany) were purchased. As a reference, GORE PROPATEN Vascular Graft with commercial Carmeda BioActive Surface (CBAS; ePTFE + HEP) and a non-heparinized analogue (ePTFE) was obtained from GORE, USA.

**Methods and Examples**

**1. Preparation of solutions**

For blending membranes with SMA-copolymer and further immobilization of heparin, various solutions were prepared and used in different membrane functionalization procedures to achieve the desired membrane structures.

1.1 <u>SMAnh Copolymer Solutions</u>

The SMAnh-copolymers, such as XIRAN SZ30010, were commercially provided and directly used for preparing the membranes. In addition, a fluorescence-labeled variant of the polymer was synthesized for studying the effectiveness and nature of SMAnh incorporation into the membrane. To achieve a labeling degree of 0.1 % maleic anhydride, 1 eq. of SMA-copolymer and 0.02 eq. of fluorophore Atto647N amine were pre-solved separately in NMP and transferred in a round bottom flask. The reaction was running over several days at room temperature (RT) in the dark, and the final conjugate was dialyzed over several days, at least three times each against 1 M NaCl and distilled water. The final dialysate was lyophilized under light protection.

1.2 <u>Polymer Solutions</u>

Different polymer solutions were prepared for producing a set of membranes according to the invention. The respective polymer solutions were prepared according to known processes. The respective amounts of PES, PVP K30, PVP K80 and SMAnh copolymer are provided in **Table IA and Table IB** below. In each case PES, PVP K30, PVP K85, and the SMAnh copolymer were dissolved in NMP. The NMP amount varied with the amount of the SMAnh copolymer. The mixture was stirred as indicated in the tables, filled in a polymer vessel, and degassed. The polymer solutions were finally

shaped either by flat sheet casting or by hollow fiber spinning. Two different center solutions were used for the recipes shown in **Table IA** during spinning: (i) NMP:$H_2O$ 50.00%:50.00% w/w and (ii) NMP:$H_2O$ 45.43%:54.57% w/w.

**Table IA: Overview over polymer solution compositions for hollow fiber (HF) spinning. Polymer solutions in this Table were stirred overnight at 70°C in a 5000mL flask. Viscosity was determined at 22°C.**

| Membrane | PES (wt. %) | NMP (wt. %) | PVP K30 (wt. %) | PVP K85 (wt. %) | SMAnh 3:1 120kDa | SMAnh 2:1 30kDa | $H_2O$ | Visco. [mPas] |
|---|---|---|---|---|---|---|---|---|
| HF-MER 0512 | 13,6 | 76,7 | 4, 8 | 1, 8 | 0, 5 | - | 2, 6 | 3380(5h) 4300(18h) |
| HF-MER 0513-1 | 13,6 | 77,2 | 4, 8 | 1, 8 | - | - | 2, 6 | 3900 |
| HF-MER 0513-2 | 13,6 | 76,2 | 4, 8 | 1, 8 | 1 | - | 2, 6 | 4965 |
| HF-MER 0523-1 | 13,6 | 76,7 | 4, 8 | 1, 8 | - | 0, 5 | 2, 6 | 4240 |
| HF-MER 0523-2 | 13,6 | 77,2 | 4, 8 | 1, 8 | - | - | 2, 6 | 3840 |
| HF-MER 0524-1 | 13,6 | 76,2 | 4, 8 | 1, 8 | - | 1 | 2, 6 | 4045 |
| HF-MER 0629 | 13,6 | 75,2 | 4, 8 | 1, 8 | - | 2 | 2, 6 | 5960 |

**Table IB: Overview over polymer solution compositions for flat sheet (FS) casting and hollow fiber (HF) spinning. Polymer solutions in this Table were stirred at RT for at least 24h.**

| Membrane | PES (wt.%) | NMP (wt.%) | PVP K30 (wt.%) | PVP K85 (wt.%) | SMAnh 2:1 10kDa | $H_2O$ |
|---|---|---|---|---|---|---|
| FS-$0_{SMAnh}$ | 7 | 83.00 | 5 | 2 | - | 3 |
| FS-$0.05_{SMAnh}$ | 7 | 82.95 | 5 | 2 | 0.05 | 3 |
| FS-$0.1_{SMAnh}$ | 7 | 82.90 | 5 | 2 | 0.1 | 3 |
| FS-$0.2_{SMAnh}$ | 7 | 82.80 | 5 | 2 | 0.2 | 3 |
| FS-$0.5_{SMAnh}$ | 7 | 82.50 | 5 | 2 | 0.5 | 3 |
| FS-$0_{SMAnh}$ | 14 | 76.00 | 5 | 2 | - | 3 |
| FS-$0.1_{MAnh}$ | 14 | 75.90 | 5 | 2 | 0.1 | 3 |
| FS-$0.2_{SMAnh}$ | 14 | 75.80 | 5 | 2 | 0.2 | 3 |

1.3 Aminated Heparin Solution

Heparin with an increased number of primary amines was synthesized by fractional heparin N-deacetylation according to a modified protocol provided in Wang et al. (2011). Heparin (100 mg) was dissolved in 20 mL of 1 M NaOH, incubated for 30 min at 60◦C, cooled to RT, and adjusted to pH 7 with 5 M HCl. The solution was then brought to RT and dialyzed overnight against distilled water using a cellulose membrane.

The dialysate was lyophilized to receive a white fluffy precipitate. Heparin activity of the aminated heparin was measured with a commercial anti-FXa activity kit and calculated with the help of a heparin standard curve. Lyophilized aminated heparin was dissolved in 0.9 % NaCl to a final concentration of 1 mg/mL and immediately used for membrane functionalization as further described below.

**2. Preparation of Membranes**

2.1 Membranes prepared from polymer solutions of Table IA

Hollow fiber membranes were prepared from solutions as described in **Table IA**, 1.2. The polymer solution was extruded through the outer ring slit of a spinneret with two concentric openings (diameter of outer boundary of ring slit: 500 μm; diameter of inner boundary of ring slit: 350 μm; diameter of center bore: 180 μm) into a coagulation bath containing water. A solution containing 50.00% w/w water and 50%.00 w/w NMP, or a solution containing 45.43% w/w NMP and 54.57% w/w water was used as the center fluid and extruded through the inner orifice of the spinneret. The temperature of the spinneret was 54°C, the temperature in the spinning shaft was 51°C, the air gap was 100 cm, and the coagulation bath had room temperature. Further membranes based on the same recipe were produced with spinneret/spinning shaft temperatures of (2) 56/53°C and (3) 58/55°C, see . Pressure at the steam supply line to the spinning shaft was 0.8 bar. The fibers were spun at a speed of 45 m/min. The fibers subsequently were guided through a sequence of water baths containing demineralized water at temperatures in the range of from 61°C to 78°C.

The fibers obtained had an inner diameter of 182 μm and a wall thickness of 34 μm. The membrane showed an asymmetric finger-like sponge structure, with average pore sizes increasing in the direction from the inner wall surface towards the outer wall surface. The presence of SMAnh in the membranes did not result in any visual peculiarities.

**Figure 12** shows scanning micrographs of an exemplary hollow fiber membrane HF-MER 0524-1 (see **Table I**) prepared at temperatures of 54°C/51°C and with a center solution NMP:$H_2O$ of 45.43%:54.57% w/w. The hollow fiber membrane shows an asymmetric, finger-like sponge structure with no irregularities on the inner and outer surface.

Minimodules, i.e., filters with a reduced size for testing, are prepared by cutting the fibers to a length of 20 cm, drying the fibers for 1 h at 40°C and <100 mbar and subsequently transferring the fibers into the housing. The ends of the fibers are potted with polyurethane. After the polyurethane has hardened, the ends of the potted membrane bundle are cut to reopen the fibers. The minimodule ensures protection of the fibers. Generally, mini modules having an effective membrane (lumen) surface A of 360 $cm^2$ are used.

Some mini-modules with hollow fibers spun at the above-mentioned temperatures and based on HF-MER 0524-1 with 1% (see **Table I**) were sterilized with steam at 121°C for 20 min. After sterilization, the Lp of the minimodules was determined together with the Lp of unsterilized minimodules. The results are provided in **Table II.**

**Table II: Average Lp values before and after sterilization for membranes with recipe HF-MER 0524-1 with 1% SMAnh spun at different temperatures (spinneret/spinning shaft) and with different center solutions. Examples 1 to 3 were spun with a center solution** NMP:$H_2O$ of 45.43%:54.57% w/w, Examples 4 and 5 with a center solution NMP:$H_2O$ of 50.00%:50.00% w/w.

| # | Spinning temperatures | Lp (unsterile modules) | | | Lp (steam sterilized) | | |
|---|---|---|---|---|---|---|---|
| | | n= | $10^{-4}$cm/ (bar ·s) | Standard deviation | n= | $10^{-4}$cm/ (bar ·s) | Standard deviation |
| 1 | 54°C/51°C | 1 | 29 | - | - | - | - |
| 2 | 56°C/53°C | 2 | 33 | 0 | - | - | - |
| 3 | 58°C/55°C | 3 | 43 | 0 | 4 | 114 | 10 |
| 4 | 58°C/55°C | 2 | 208 | 2 | 3 | 470 | 38 |
| 5 | 56°C/53°C | 2 | 139 | 1 | 4 | 310 | 10 |

The hydraulic permeability of a mini-module is determined by pressing a defined volume of water under pressure through the mini-module, which has been sealed on one side, and measuring the required time. The hydraulic permeability is calculated from the determined time t, the effective membrane surface area A, the applied pressure p and the volume of water pressed through the membrane V, according to equation (1):

$$Lp = V / [p \cdot A \cdot t] \qquad (1)$$

The effective membrane surface area A is calculated from the fiber length and the inner diameter of the fiber according to equation (2)

$$A = \pi \cdot d_i \cdot l \cdot [cm^2] \quad (2)$$

with $d_i$ = inner diameter of fiber [cm], and 1 = effective fiber length [cm]. The minimodule is wetted thirty minutes before the Lp-test is performed. For this purpose, the mini-module is put in a box containing 500 mL of ultrapure water. After 30 minutes, the minimodule is transferred into the testing system. The testing system consists of a water bath that is maintained at 37°C and a device where the minimodule can be mounted. The filling height of the water bath has to ensure that the minimodule is located underneath the water surface in the designated device.

In order to avoid that a leakage of the membrane leads to a wrong test result, an integrity test of the mini-module and the test system is carried out in advance. The integrity test is performed by pressing air through the minimodule that is closed on one side. Air bubbles indicate a leakage of the mini-module or the test device. It has to be checked if the leakage is due to an incorrect mounting of the minimodule in the test device or if the membrane leaks. The minimodule has to be discarded if a leakage of the membrane is detected. The pressure applied in the integrity test has to be at least the same value as the pressure applied during the determination of the hydraulic permeability in order to ensure that no leakage can occur during the measurement of the hydraulic permeability because the pressure applied is too high.

2.2.Membranes prepared from polymer solutions of **Table IB**

Flat sheet and hollow fiber membranes were fabricated as described in Rose et al. (2022): Chemistry in a spinneret-polydopamine functionalized hollow fiber membranes. Journal of Membrane Science 648, 120324. During flat sheet casting, the casting knife created a 200 μm thick polymer film out of different polymer solutions (see **Table IB)** onto a glass plate. This glass plate was subsequently immersed in a coagulation bath consisting of DI water, where the phase inversion occurred. Afterwards, the resulting membrane was stored for 24 h in a DI water bath and finally air-dried at room temperature. For hollow fiber membrane spinning, a single orifice spinneret with a 0.4 mm diameter bore needle, and a polymer orifice diameter of 1.12 mm is used. Through this spinneret, different batches of polymer solutions **(Table IB)** and the bore solution, consisting of 50 wt.% NMP and DI water was coextruded. The resulting fiber passed through an air gap and entered a coagulation bath consisting of DI water. The take-up speed was controlled by a motorized pulling wheel. This wheel transferred the fiber into a second DI water bath. The spun fibers were stored for 24 h in another DI water bath until they were taken out and air-dried at room temperature. The spinning parameters used are listed in **Table III.**

**Table III: Overview over spinning parameters of the hollow fiber membranes HF-0$_{SMAnh}$, HF-0.1$_{SMAnh}$, and HF-0.2$_{SMAnh}$, see Table IB.**

| Parameter | Unit | Value |
|---|---|---|
| Polymer solution flow rate | g/min | 7.5 |
| Polymer solution temperature | °C | 60 |
| Center fluid (bore solution) flow rate | mL/min | 5.5 |
| Pulling speed | m/min | 11.9 |
| Air gap | cm | 2 |
| Coagulation bath temperature | °C | 60 |

For hollow fiber membrane characterization, the spun hollow fiber membranes from **Table IB** and **Table III** were glued into four-end membrane modules with an inlet and outlet on the permeate side. After the glue was dried, the membranes were wetted with a 50 wt.% ethanol and DI water mixture.

**3. Analytical Methods for Membrane Characterization**

The following analytical methods were applied to membranes prepared from polymer solutions shown in Table IB and parameters shown in Table III. The methods are applicable for both flat sheet and hollow fiber membranes.

3.1 Field Emission Scanning Electron Microscopy

The membrane morphology was visually recorded by the field emission scanning electron microscopy (FeSEM) using a Hitachi S-4800 or Hitachi SU 5000 Scanning Electron Microscope. Cross-section images of the membranes were taken. Samples were fractured in liquid nitrogen. All samples were dried in a vacuum oven overnight and then sputtered with around 7 nm AuPd 80/20 until the images were taken.

3.2 Static Fouling Measurements

Static bovine serum albumin (BSA) fouling measurements were performed with 1 $cm^2$ flat sheet membrane pieces. Placed in a 12-well plate, these pieces were washed three times in 2 mL PBS buffer solution placed on a rocking chamber for 1 min at 60 rpm. Then, 2 mL of 50 mg/L FITC-BSA in PBS buffer was added for protein adsorption to each well and shaken for 3 h at 60 rpm in the dark. Subsequently, the membrane pieces were washed three times with DI water before each piece was placed onto microscope slides, covered with PBS. Using an Axiovert 200M epifluorescence microscope, the membranes were measured at 1000ms.

3.3 SMAnh-Copolymer Membrane Stability Measurements

Flat sheet membranes blended with 0.1 wt.% SMAnh-copolymer (2:1, 10kDa) were punched into disks of 10 mm diameter. Membranes were transferred in a 24-well plate and incubated with 500 μL PBS or 500 μL 50 mM Tris/100 mM NaCl/4 % BSA (Tris-BSA), pH 7.4 or 500 μL citrate plasma. Incubation was performed at 37°C under slight shaking. At the indicated time points, the media were exchanged, and the surface fluorescence was measured by a fluorescence scanner FLA 5100 (Fujifilm, Japan) at 635 nm excitation, 500 V. Surface fluorescence was quantified by MultiGauge software and corrected for the background fluorescence of the SMAnh-blended membrane (FSMAnh-Atto647N - FSMAnh). The polymer stability in the membrane was calculated, taking the surface fluorescence at day 1 as reference (Equation 1, S: stability of membrane fluorescence, F: fluorescence signal, d: day of measurement).

$$S[\%] = \frac{(\mathrm{FSMAnh{-}Atto647N} - \mathrm{FSMAnh})\mathrm{dx}}{(\mathrm{FSMA{-}Atto647N} - \mathrm{FSMA})\mathrm{d1}} \quad (1)$$

3.4 Proof of concept: Determination of covalent $NH_2$-group binding

Flat sheet membranes were punched into circles of 13 mm diameter. Hydrolyzed maleic anhydride groups were reactivated by tempering the membrane for 2 h at 120°C. Tempered membranes were immediately coated with 71.4 μM AZ Dye 647-NH2 in 0.9 % NaCl for 1 h at RT. Subsequently, membranes were immersed in 0.9 % NaCl, transferred to a 24-well plate and washed three times in Tris-BSA buffer containing 0.1 % BSA, pH 7.4. Under slight shaking, coated membranes were incubated in the buffer at RT. After 7 d, the buffer was exchanged by 0.9 % NaCl containing 0.05 % TWEEN 20. Surface fluorescence was analysed at indicated time points by a fluorescence scanner as described above. Stability of the label on the membranes was calculated using Equation 2 (S: stability of membrane fluorescence, F: fluorescence signal, d: day of measurement).

$$\mathrm{S}[\%] = \frac{(FSMA{-}AZ\ Dye\ 647{-}NH2 - FSMA)dx}{(FSMA{-}AZ647\ Dye\ 647{-}NH2 - FSMA)d1} \quad (2)$$

**4. Binding of functional molecules: heparin**

The following methods were applied to membranes prepared from polymer solutions shown in **Table IB** and parameters shown in **Table III.** They can equally be applied to the membranes prepared from polymer solutions shown in **Table IA** or any other membranes according to the present disclosure. The methods are applicable for both flat sheet and hollow fiber membranes.

4.1 Membrane functionalization with aminated heparin

Flat sheet membranes were punched into circles of 13 mm. After a 2 h temper step at 120°C, membranes were coated with 1 mg/mL aminated heparin in 0.9 % NaCl for 1 h at RT. Unbound heparin was washed off by immersion and overnight shaking in 0.9 % NaCl. Finally, membranes were washed in MilliQ to prevent salt crystals and were dried at RT. For heparinization of the lumen side of the hollow fiber membranes, single fibers were first tempered for 2 h at 120°C under vacuum in a vacuum oven. Directly following the tempering step, fibers were glued in a four-end membrane module. To dry the glue, the module was stored overnight at 30°C under vacuum in a vacuum oven. Afterwards, the shell side of the membranes was filled with 0.9 % NaCl and the lumen side was filled with 1 mg/mL aminated heparin in 0.9 % NaCl and stored for 1 h at RT. Finally, the lumen side was flushed three times with 0.9 % NaCl, and subsequently, both sides were flushed three times with DI water. Heparin-functionalized samples are indicated herein with the abbreviation/extension 'HEP'.

4.2 Heparin release

Flat sheet membranes were transferred to a 24-well plate and equilibrated in Tris-BSA buffer with 0.1 % BSA, pH 7.4 for 30 min. Hollow fiber membranes were perfused individually for 30 min with a Tris-BSA flow of 20 pL/min. Subsequently, heparin activity in the equilibration solution was measured with a commercial anti-FXa activity kit and calculated based on a heparin standard curve.

4.3 FIIa/ATIII activity measurements

Equal volumes of 40 nM FIIa and 400 nM ATIII in Tris-BSA buffer with 0.1 % BSA, pH 7.4 were mixed and either immediately added to equilibrated flat sheet membranes for 10-30 min or perfused through equilibrated hollow fiber membranes for 12.5 min at 20 pL/min flow. Subsequently, FIIa activity was determined as kinetic reaction with 250 μM of the chromogenic substrate S-2238 at 37°C. Substrate conversion was monitored with a Tecan Spark plate reader (Tecan, Switzerland) at 405 nm for 30 min/every 30 sec. FIIa activity was calculated along a FIIa/ATIII standard curve.

4.4 Membrane Surface Charge

For surface charge measurements, a single fiber was placed in a 7 cm PE tube. The shell side of the fiber was filled with glue to prevent permeation during measurement. Before measurement started, the membrane module was flushed with 5 L of 1 mM KCl solution. The zeta potential of the lumen channel of the hollow fiber membranes was analysed with a SurPASS electrokinetic analysers (Anton Paar, Austria). By titration of 0.1 M HCl 301 and 0.1 M NaOH, this analyser automatically varies the pH value from 3 to 10. Four zeta potentials were measured for each pH.

4.5 Pure Water Permeance

For the determination of the pure water permeance (PWP, or Lp) of spun hollow fiber membrane, four-end membrane modules were measured in a dead-end filtration and a transmembrane pressure (TMP) of 1 bar. By reaching the steady-state, the measurement was started with DI water at RT, and the PWP was calculated in L/($m^2$ h bar) or short LMH/bar. Three different membrane modules were measured and averaged for each membrane batch.

4.6 Molecular Weight Cut-Off

Three membrane modules of each membrane batch were measured in cross-flow filtration with a solution consisting of PEGs and/or PEO in DI water and a TMP of 313 1 bar to determine the MWCO. Before the measurements start, PEGs and the PEO are dissolved in DI water with 1 g/L. For turbulent flow behaviour (Re >2300) on the lumen sides of the hollow fiber membranes, the feed was set to 150 kg/h. At the beginning and after one hour of measurement, a permeate sample was taken, which was analysed by size-exclusion chromatography (SEC) using an Agilent 1200 system. The molecular weight and the concentration of each PEG or PEO were determined. Equation 3 shows the calculation of retention. This depends on the measured concentration of the feed $c_{Feed}$ and the permeate $C_{Permeate}$.

$$Retention = \frac{cPermeate}{cFeed} \cdot 100\% \quad (3)$$

The MW of a PEG/PEO that was retained by the membrane to 90% represents the MWCO value.

4.7 Statistic data analysis

All presented results were measured at least as triplicate, except indicated differently. Error bars depict either the standard deviation or the range of the results, as indicated in the corresponding figures.

**Examples**

The following examples are based on experiments performed with membranes prepared from polymer solution of **Table IB** and prepared as described and analysed in Sections 2.2 and 3 of the present disclosure. First, the surface of SMA-copolymer blended flat sheet membranes was characterized with membrane morphology images, SMA-stability tests as well as BSA fouling measurements. Furthermore, the potential of the system to serve as a platform for membrane functionalization by immobilization of amine-group bearing functional molecules was demonstrated. Finally, the findings

were translated to the formation of heparin-functionalized hollow fibers, pointing at hemodialysis as one potential field of application for the presented surface functionalization strategy.

**Example 1: SMAnh copolymer blended flat sheet membranes**

The blending of SMAnh copolymer into the membrane structure combines the membrane fabrication with the SMAnh copolymer integration in the membrane structure in a single step. Due to the high solubility in NMP, the SMAnh copolymer was directly added during the preparation of the polymer solution in a concentration range of 0 to 0.5 wt.% without prior dissolution. To visualize the homogeneous distribution of the SMAnh copolymer in the polymer solution, an Atto647N-labeled version was added to the polymer solution at a concentration of 0.1 wt.%. To analyze the influence of the SMAnh copolymer on membrane formation and the resulting membrane morphology, **Figure 3** shows cross-section images of the flat sheet membranes with and without SMAnh copolymer. All membranes exhibit an asymmetric structure and show an open pore structure that increases in density towards the skin layer. Although the concentrations of the SMAnh copolymer in the polymer solution differ significantly, no distinct differences in membrane morphology, such as defect formations, are observed.

To further investigate the influence of the blended SMAnh copolymer in the membrane structure on the surface properties, static fouling measurements were performed by immersing samples in a solution of green-fluorescent labelled BSA. **Figure 4** images the membrane surfaces after a washing step, taken with a fluorescence microscope. The membrane samples show different fouling tendencies due to the blended SMAnh copolymer. The reference membrane FS-$0_{SMAnh}$ appears in green colour, whereas all blended membranes (FS-$0.05_{SMAnh}$ - FS-$0.5_{SMAnh}$) show a distinctly weaker green coloration up to no coloration at all. No BSA adsorbed on the blended membrane surface for SMAnh copolymer contents of 0.2 wt. % 358 and above (FS-$0.2_{SMAnh}$ and FS-$0.5_{SMAnh}$) . Mahdavi et al. (2016): An efficient nanofiltration membrane based on blending of polyethersulfone with modified (styrene/maleic anhydride) copolymer. Journal of the Iranian Chemical Society 13(5), 873-880, also showed lower adsorption of BSA to SMAnh copolymer modified surfaces. It is assumed that hydrophilized SMAnh copolymers electrostatically repel the BSA due to the negative charge and thus prevent the adsorption of BSA to the membrane surface. The static fouling results confirm the presence of SMAnh copolymers in the membrane and demonstrate significant changes in the membrane surface properties already for traces of this additive in the polymer mixture. Despite these functional changes, the membrane structure was not affected by the blended SMAnh copolymer up to 0.5 wt.%, as confirmed by FeSEM **(Figure 3).**

**Example 2: Stability of the blended SMAnh Copolymer**

As shown above, blending SMAnh copolymer in the PES/PVP membrane dope solution provides an easy and fast possibility to introduce improved membrane properties, as reduced fouling. In a next step, the polymer distribution and exposure on the membrane surface as well as the stability of the SMAnh copolymer anchorage in the membrane structure were tested. To elucidate these factors, a defined amount of SMAnh copolymer maleic anhydride groups was fluorescently labelled, enabling tracking of the SMAnh copolymer in the membrane structure (see Example 1).

Flat sheet membranes with 0.1 wt.% labelled SMAnh copolymer (FS-$0.1_{SMAnh}$-Atto647N) were prepared in analogy to the samples with unlabelled SMAnh copolymer version (FS-$0.1_{SMAnh}$) . To mimic the challenges on the membranes under realistic conditions, samples were incubated at 37°C in (1) standard PBS buffer or (2) Tris-NaCl buffer with 4% BSA, corresponding to the albumin concentration in whole blood (Leeman et al. (2018): Proteins and antibodies in serum, plasma, and whole blood-size characterization using asymmetrical flow field-flow fractionation (AF4). Analytical and Bioanalytical Chemistry 410(20), 4867-4873) or (3) human citrate plasma. The surface fluorescence of FS-$0.1_{SMAnh}$-Atto647N was analyzed over a total of 11 days by fluorescence scanning.

The homogeneous surface fluorescence of the membranes confirmed the SMAnh copolymer integration in the membrane structure without signs of aggregation or phase separation. A significant initial loss of fluorescence was detectable in all tested media. Due to the low solubility of the SMAnh copolymer, reorientation of the copolymer in the membrane may dominate over elution. After 24 h, a high stability of the SMAnh copolymer in the membrane was achieved, independent of the incubation media **(Figure 5b).** Since there is no chemical reactivity between the membrane components and the blended SMAnh copolymer, a stable integration is essentially based on structural effects and non-covalent interactions. Previous studies already showed stable adsorption of a variety of PEGylated SMA-copolymers from aqueous solution to versatile model surfaces such as polystyrene, poly(ether sulfone), or thermoplastic polyurethane. Thereby, hydrophobic forces and π-π-stacking interactions mainly drove the surface immobilization (Pompe et al. (2003): Maleic anydride copolymers - a versatile platform for molecular biosurface engineering. Biomacromolecules 4(4), 1072-1079). Since the hydrophilic PEG component is not present in the current approach, an even stronger hydrophobic interactions between the SMAnh copolymer and the membrane polymer PES can be assumed, while the hydrophilic maleic anhydride group tends to migrate to the surface. This allows a high and long-term polymer membrane stability including under physiologically relevant conditions in aqueous media at 37°C and in the presence of high ion and protein

concentrations, such as in extracorporeal blood purification applications.

**Example 3: Covalent $NH_2$-coupling to maleic anhydride groups of the blended SMAnh copolymer**

The stability assay with FS-$0.1_{SMAnh}$-Atto647N confirmed a homogenous and stable integration of the blended SMAnh copolymer in the membrane structure as well as a presentation of the labelled maleic anhydride groups on the membrane surface. In a next step, the covalent functionalization with an $NH_2$-group was elucidated, since this principle enables the binding of a large range of amine-bearing molecules, such as drugs, carbohydrates, nucleic acids, or proteins. As a proof-of-concept, flat sheet membranes were blended with different concentrations of SMAnh copolymer and subsequently functionalized with a fluorescence label arrying a free $NH_2$-group. The membranes were tempered directly prior to the functionalization reaction to reactivate potentially hydrolyzed maleic anhydride groups and achieve a maximal chemical reactivity. As a control, the FS-$0_{SMAnh}$ reference without SMAnh-copolymer was functionalized in an equal procedure to the blended samples.

Initially strong adsorption of the fluorescent label was detected on the FS-$0_{SMAnh}$ reference, whereas the initial binding to the SMAnh copolymer blended membranes was clearly lower **(Figure 6(A)).** The total amount of bound label was highest for FS-$0.1_{SMAnh}$ (**Figure 6(B)**)**.** Notably, these results are comparable to the fouling studies using fluorescence labelled BSA, where no BSA adsorption was detectable for 0.2% and 0.5% blended SMAnh copolymer (**Figure 4**)**.** In this case of fluorescence label binding, the detected variable binding behaviour may be attributed to structural effects as well as differences in hydrophilicity and membrane swelling dependent on the SMAnh copolymer content. The reduced label binding to the SMAnh copolymer blended membranes may also correlate to the low fouling of these membranes and confirms again the surface activity of the blended SMAnh copolymer.

The binding stability of the label to the membrane was calculated in reference to 1 day in Tris-BSA (d1), excluding the initial elution phase of the polymer (**Figure 6(C)**). While the fluorescent label was continuously washed off from the FS-$0_{SMAnh}$ reference in Tris-BSA, a basically stable binding was observed on the flat sheet membranes with blended SMAnh copolymer after 24-48 h. After 7 days in Tris-BSA, membranes were transferred to TWEEN 20. The polysorbate TWEEN 20 presents a non-ionic, amphipathic surfactant and decreases the unspecific surface binding by hydrophobic interactions. The label adsorption to the FS-$0_{SMAnh}$ reference was immediately reduced to the background level, demonstrating that the prior label binding was mediated by unspecific interactions (Kerwin (2008): Polysorbates 20 and 80 used in the formulation of protein biotherapeutics: structure and degradation pathways. J. Pharm. Sci. 97 (8), 2924-2935). In contrast, the membranes blended with SMAnh copolymer still maintained 31-61% of the 1 day-fluorescence after 7 days in the surfactant (d14), confirming a covalent label attachment to these samples and showing an increased binding stability with SMAnh copolymer concentration.

To summarize these results, the SMAnh copolymer was successfully blended into flat sheet membranes by simple and direct addition to the membrane polymer solution. The blended SMAnh copolymer was stably integrated into the membrane structure and showed a homogenous distribution on the membrane surface. The maleic anhydride groups of the blended SMAnh copolymer were shown to be available for a covalent functionalization with free amine groups. Based on these results, blending of SMAnh copolymer provides a platform for covalent decoration or functionalization of membrane surfaces with amine-carrying molecules has been successfully provided.

**Example 4: Heparin immobilization on SMAnh copolymer blended flat sheet membranes**

As an example for how the platform technology provided herein can be applied, heparinization of the blood-contacting surface of dialysis hollow fiber membranes is shown. As the system provides the opportunity for a direct covalent attachment of heparin to the membrane surface without additional functionalization steps, the provided heparinized dialysis membrane can beneficially be used to produce dialyzers for use in dialysis treatments. First, the heparin immobilization to SMAnh copolymer blended PES/PVP membranes was investigated on flat sheet membranes and subsequently translated to hollow fiber membranes. Previous experiments used a fluorescence label-$NH_2$ model to demonstrate the covalent functionalization of flat sheet membranes blended with SMAnh copolymer via maleic anhydride-$NH_2$ binding. Based on that, the principle was translated to the covalent attachment of the anticoagulant heparin to the membrane surface. The highly negatively charged biomolecule heparin itself is described to have naturally occurring primary amines, most probably located on N-unsubstituted glucosamine units (Fry et al. (2010): Synthesis and anticoagulant activity of heparin immobilized "end-on" to polystyrene microspheres coated with end-group activated polyethylene oxide. Journal of Biomedical Materials Research Part B: Applied Biomaterials (2010); URL https://doi.org/10.1002/jbm.b.31640). However, Osmond et al. (2002): Protein-heparin interactions measured by BIAcore 2000 are affected by the method of heparin immobilization. Analytical Biochemistry 310(2), 199-207, found that only about 10% of the tested heparin chains contained such unsubstituted amines. To increase the coupling efficiency, additional amine moieties were introduced to the heparin before coupling. For this purpose, partial N-deacetylation of unfractionated heparin was performed, providing reactive amino groups distributed all over the heparin molecule (Wang et al. (2011)).

Chemical treatment of heparin bears the risk of modifying the essential heparin pentasaccharide sequence which mediates the anticoagulant drug effect via heparin-ATIII binding (Shriver et al. (2000): Cleavage of the antithrombin III binding site in heparin by heparinases and its implication in the generation of low molecular weight heparin. Proceedings of the National Academy of Sciences 97(19), 10365-10370). However, the activity of the aminated heparin obtained by partial N-deacetylation was found to be comparable to the unmodified compound, assuming that the pentasaccharide sequence was not significantly affected by the chemical modification step.

Heparin was immobilized onto membranes blended with SMAnh copolymer in a similar manner as the immobilization of the label-$NH_2$. Before testing the anticoagulant effect, the functionalized membranes were washed for 1 day to cover the initial polymer wash-out phase and remove the non-specifically adsorbed heparin. In the subsequent equilibration in Tris-BSA buffer, heparin release from the heparin functionalized samples was on the level of the assay background, as measured for the uncoated references. In contrast, a commercial heparinized ePTFE graft released factor 3-4 times more heparin **(Figure 7A).**

It has been previously described that the inhibitory activity of surface-immobilized heparin can significantly differ from free heparin in solution. For this reason, the anticoagulant effect of the covalently heparin-immobilized membranes was not elucidated as nominal heparin activity, but the inhibition of coagulation factor thrombin (FIIa) by its natural inhibitor antithrombin (ATIII), accelerated by the anticoagulant, was measured. FIIa activity was slightly influenced on the SMAnh copolymer blended samples without heparin, dependent on the SMAnh copolymer concentration. The surface-immobilized heparin clearly reduced the activity of the enzyme, achieving comparable effects to the commercial graft **(Figure 7B).** An inhibitory effect was also observed for the heparin immobilized FS-$0_{SMAnh}$ control without SMAnh copolymer. This is attributed to the high unspecific binding of heparin to the membrane. As seen for the label-$NH_2$ stability, there was a high wash-off from the FS-$0_{SMAnh}$ control, but since much more label was bound in the beginning, the membrane-bound amount after 1 day was nominally comparable for FS-$0_{SMAnh}$ and SMAnh copolymer blended samples (see **Figure 6B**).

**Example 5: SMAnh copolymer blended hollow fiber membranes**

The promising results of heparinized flat sheet membranes were transferred to hollow fiber membranes. Two different fiber batches, a reference batch, and a SMAnh copolymer blended batch (HF-$0.1_{SMAnh}$) were prepared. **Figure 8** shows the FeSEM images of the hollow fiber membrane HF-$0.1_{SMAnh}$. The hollow fiber membrane wall is open porous (**Figure 8c**) with a selective layer on the lumen side (**Figure 8d**). As expected from the flat sheet membranes, the blended SMAnh copolymer created no defects during membrane formation in the spun hollow fiber membranes. Compared to the reference PES/PVP membranes, no differences in morphology appear.

The inner diameters of all membranes, **HF-$0_{SMAnh}$,** HF-$0.1_{SMAnh}$, and HF-$0.2_{SMAnh}$, were in a similar size range, and the wall thickness was similar (**Table IV**). Additionally, the membranes resist burst pressures in a range between 6.5 and 8.9 bar. These burst pressures reflect high mechanical stability of the fibers, when considering applications in dialysis and other extracorporeal therapies.

**Table IV: Dimensions and burst pressure of hollow fiber membranes prepared from polymer solutions according to Table IB.**

| Membranes | Inner diameter (μm) | Wall thickness (μm) | Burst pressure (bar) |
|---|---|---|---|
| HF-$0_{SMAnh}$ | 714 | 257 | 7,7±0.3 |
| HF-$0.1_{SMAnh}$ | 693 | 262 | 8.9±0.2 |
| HF-$0.2_{SMnh}$ | 676 | 228 | 6.5±0.3 |

**Figure 9** illustrates the zeta potential over the pH values of the untreated PES/PVP membrane (HF-$0_{SMAnh}$) , the SMAnh copolymer blended membrane (HF-$0.1_{SMAnh}$) , and the SMAnh copolymer blended membrane functionalized with heparin (HF-$0.1_{SMAnhHEP}$) . HF-$0_{SMAnh}$ exhibited a negative zeta potential between pH 3 and 10. This zeta potential course is typical for PES/PVP membranes. By blending the SMAnh copolymer into the polymer solution (HF-$0.1_{SMAnh}$) , the zeta potential of the resulting membrane surface decreased significantly due to the hydrolyzed SMAnh copolymer in the membrane structure. Heparinization of the SMAnh copolymer blended membrane surface (HF-$0.1_{SMAnhHEP}$) caused a shift to more negative zeta potentials due to the highly negative charge of the sulfonate and carboxylate groups of the heparin, slightly exceeding the zeta potential of the hydrolyzed SMAnh copolymer. This shift to more negative values after heparinization is an indication for the successful heparinization of the SMAnh copolymer blended membrane.

The heparinization of the SMAnh copolymer blended membrane influenced the pure water permeance of these membranes. **Figure 10** illustrates the results of pure water permeance (PWP) and molecular weight cut-off (MWCO) measurements of membrane modules with **HF-$0_{SMAnh}$,** HF-$0.1_{SMAnh}$, and HF-$0.2_{SMAnh}$ fibers with (HEP) and without immobilized heparin. The presented membranes exhibited a PWP in a range of 7.5 to 16 LMH/bar. The results of the

MWCOs were in a range of around 5 to 13 kDa. The reference membrane HF-$_{0SMAnh}$ had a PWP of 10 LMH/bar with a MWCO of 11 kDa and was thus slightly above the values of HF-0.1$_{SMAnh}$ with a PWP of 9 LMH/bar and a MWCO of 8 kDa. Doubling the concentration of SMAnh copolymer in the polymer solution (HF-0.2$_{SMAnh}$) showed no significant effect on the PWP and MWCO. The concentration of SMAnh copolymers seems to low enough to not affect the permeance and cut-off of the membrane.

The result was different after heparin immobilization. For the HF-0.1$_{SMAnh}$ fibers, the PWP increased slightly after heparin coating to 12 LMH/bar while the MWCO decreased to 6 kDa. This indicates a successful heparin immobilization. Although the MWCO decreased slightly, presumably because of the additional heparin layer, the PWP increased because of the hydrophilic property of heparin. The HF-0.2$_{SMAnh}$ fibers showed similar results after heparinization. The spun hollow fibers were denser than commercial dialysis membranes regarding PWP and MWCO in tis case, but the membranes prepared according to commercial dialysis membranes (Table IA) showed that SMAnh blending can successfully be achieved without a negative impact on PWP (Lp) and/or MWCO. This proves that it is possible to further fine-tune current standard recipes used for commercial membranes with undue burden, by adjusting polymer formulation and/or spinning parameters, such as, for example, temperatures.

**Example 6: Anticoagulant effect of heparin functionalized SMAnh copolymer blended hollow fiber membranes**

To determine the anticoagulant effect of HF-0.1$_{SMAnhHEP}$, a single membrane flow through approach was developed. Membranes were perfused with Tris-BSA solution for equilibration and subsequently with an ATIII/FIIa solution. In contrast to the measurements on flat sheet membranes, hollow fiber perfusion mimics the realistic challenges to the membrane immobilization, such as shear stress. Although the perfusion velocity is oriented on realistic hemodialysis setups, only a very low heparin surface release from HF-0.1$_{SMAnhHEP}$ was measured, demonstrating the high stability of the covalently bound inhibitor on the membrane surface **(Figure 11A).** In comparison to the commercial heparinized vascular graft used as a control for the flat sheet membrane measurements, significantly less heparin was released from the immobilized hollow fiber **(Figure 7A).** Since HF-0$_{SMAnh}$ and HF-0.1$_{SMAnh}$ references were not coated with heparin, the low detectable surface release refers to the assay background. Measurement of FIIa activity after membrane perfusion revealed the heparin-mediated catalysis of FIIa inhibition by ATIII. While the heparin-free HF-0.1$_{SMAnh}$ showed no effect on enzyme activity compared to the native control, a clear reduction was detected on HF-0.1$_{SMAnhHEP}$ (**Figure 11B**). The inhibition of enzyme activity by 45% on HF-0.1$_{SMAnhHEP}$ compared to HF-0$_{SMAnh}$ closely reflects the results achieved on the flat sheet membranes **(Figure 7B).** Overall, the results demonstrate the successful transfer of the membrane immobilization strategy from flat sheet to hollow fiber membranes.

**Summary of Examples**

In the present disclosure, blended traces of styrene-maleic anhydride (SMAnh) copolymers successfully equipped polyethersulfone/polyvinylpyrrolidone membranes with reactivity to amine groups. The blended SMAnh copolymers were stably anchored in the membrane and homogenously distributed on the surface without affecting the membrane structure. A proof-of-concept experiment demonstrated the availability of the reactive maleic anhydrides as a platform for covalent membrane functionalization with amine-bearing molecules. As an example, the affinity of the amine groups was used for the anticoagulant functionalization of the membrane by grafting aminated heparin. The technology was established on both flat sheet and hollow fiber membranes, resulting in membranes with anticoagulant activity at comparable mechanical properties to the references.

The application of the reported approach to membrane functionalization is, however, not limited to the heparinization of hemodialysis membranes. Staying in the frame of hemodialysis, SMAnh copolymer blended membranes can, e.g., be functionalized with urease for the removal of urea during blood purification. Overall, membrane blended SMAnh copolymers offer a powerful and versatile means for effective surface functionalization to improve or augment membrane properties by a simple and single-step membrane functionalization with bioactive, functional molecules.

**Claims**

1. A membrane configured for the immobilization of amine-group bearing compounds on the surface of the membrane, wherein the membrane comprises a blend of (i) a polysulfone (PS), a polyethersulfone (PES) or a polyarylethersulfone (PAES); (ii) a polyvinylpyrrolidone (PVP); and (iii) a poly(styrene maleic anhydride)-copolymer.

2. The membrane according to claim 1, wherein the membrane comprises the poly(styrene maleic anhydride)-copolymer in an amount of from 0.01 to 2.2 wt.-%.

3. The membrane according to claim 1 or claim 2, wherein the membrane comprises the PVP in an amount of from 2.0 to 5.0 wt.-% PVP and from 95 to 98 wt.-% PES, PAES or PS.

4. The membrane according to any of claims 1 to 3, wherein the membrane further comprises an amine-group bearing compound which is covalently bound to the surface of the membrane.

5. The membrane of claim 4, wherein the amine-group bearing compound is aminated heparin.

6. The membrane according to any of claims 1 to 5, wherein the membrane is prepared from a polymer solution which comprises from 10 to 15 wt.%, relative to the total weight of the polymer solution, of polysulfone, polyethersulfone or polyarylethersulfone; from 1 to 10 wt.%, relative to the total weight of the polymer solution, of polyvinylpyrrolidone; and from 0.03 to 2.5 wt-%, relative to the total weight of the solution, of poly(styrene maleic anhydride)-copolymer.

7. The membrane according to any of claims 1 to 6, wherein the PVP consists of 20-40 wt.%, based on the total PVP, of a low molecular weight component having a molecular weight less than 100,000 Da and 60-80 wt.%, based on the total PVP, of a high molecular weight component having a molecular weight of 100,000 Da or more.

8. The membrane according to any of claims 1 to 7, wherein the membrane is a hollow fiber membrane or a flat sheet membrane.

9. A process for preparing a porous hollow fiber membrane configured for the immobilization of amine groups on the surface of the membrane, said process comprising the steps of

a) dissolving (i) at least one of polysulfone, polyethersulfone, or polyarylethersulfone, (ii) at least one polyvinylpyrrolidone, and (iii) at least one poly(styrene maleic anhydride)-copolymer to form a polymer solution;
b) extruding the polymer solution through an outer ring slit of a nozzle with two concentric openings into a precipitation bath; simultaneously
c) extruding a center fluid through the inner opening of the nozzle;
d) washing the membrane obtained; and optionally drying the membrane;

wherein the polymer solution comprises from 5 to 15 wt-%, relative to the total weight of the polymer solution, of a polysulfone, polyethersulfone, or polyarylethersulfone, and from 3 to 10 wt-%, relative to the total weight of the polymer solution, of a polyvinylpyrrolidone, and from 0.03 to 2.5 wt-%, relative to the total weight of the solution, of a poly(styrene maleic anhydride)-copolymer.

10. The process according to claim 9, wherein the polymer solution further comprises from 70 to 90 wt-%, relative to the total weight of the polymer solution NMP, and from 2 to 5 wt-%, relative to the total weight of the polymer solution, $H_2O$.

11. The process according to claim 9 or claim 10, wherein the center fluid comprises 45 to 60 wt.-% NMP and 40 to 55 wt.-% $H_2O$.

12. A method of functionalizing a membrane with a functional molecule on at least one surface of the membrane, comprising providing a membrane comprising a blend of (i) a polysulfone (PS), a polyethersulfone (PES) or a polyarylethersulfone (PAES); (ii) a polyvinylpyrrolidone (PVP); and (iii) a poly(styrene maleic anhydride)-copolymer (SMAnh) and subsequently covalently binding an amine-bearing compound to the at least one surface of the membrane.

13. A functionalized membrane comprising a blend of (i) a polysulfone (PS), a polyethersulfone (PES) or a polyarylethersulfone (PAES); (ii) a polyvinylpyrrolidone (PVP); (iii) a poly(styrene maleic anhydride)-copolymer (SMAnh); and (iv) a functional molecule which is covalently bound to the maleic anhydride group of the SMAnh.

14. A functionalized membrane according to claim 13, wherein the functional molecule is an anticoagulant.

15. A functionalized membrane according to claim 14, wherein the anticoagulant is aminated heparin.

16. A filtration device comprising a bundle of hollow fibers according to any of claims 1 to 8 and claims 13 to 15.

17. Use of a membrane according to any of claims 1 to 8 or of a filtration device of claim 16 for the covalent immobilization

of amine-group bearing functional molecules.

**18.** Use of a membrane according to any of claims 1 to 8 and 13 to 15 or of a filtration device of claim 16 in extracorporeal blood treatment therapies.

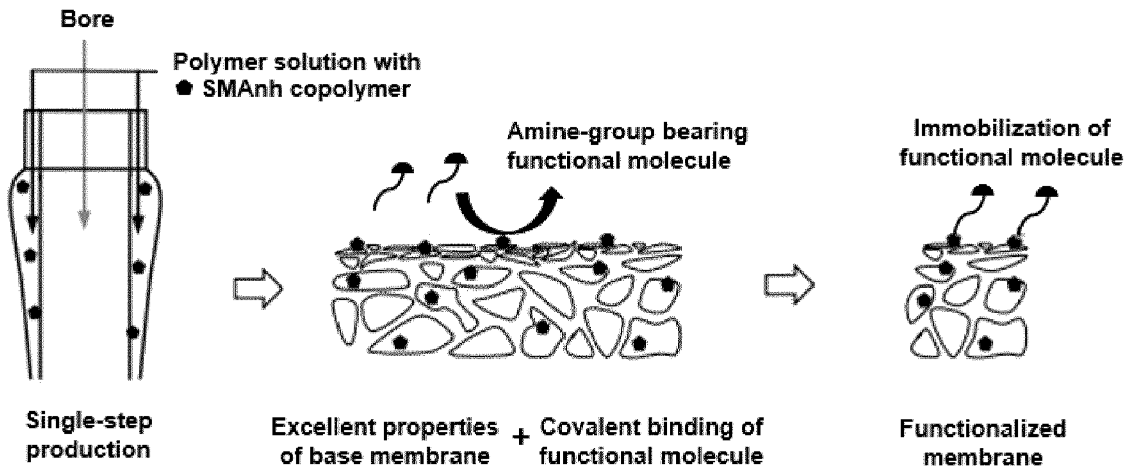
Bore
Polymer solution with
SMAnh copolymer
Amine-group bearing
functional molecule
Immobilization of
functional molecule
Single-step
production
Excellent properties
of base membrane
+
Covalent binding of
functional molecule
Functionalized
membrane

Figure 1

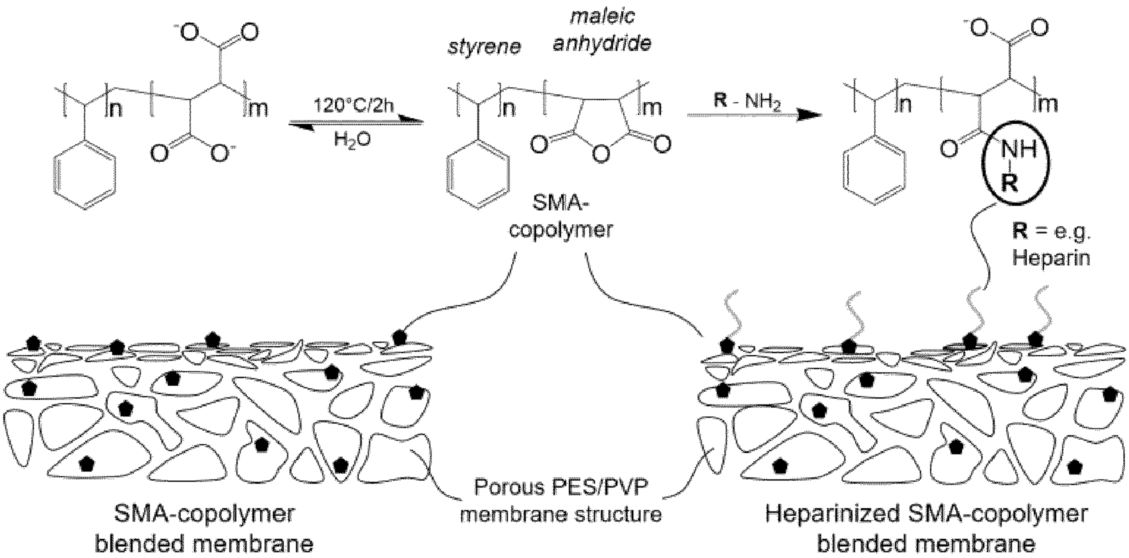
maleic
styrene anhydride
120°C/2h
$H_2O$
R - $NH_2$
SMA-
copolymer
R = e.g.
Heparin
Porous PES/PVP
membrane structure
SMA-copolymer
blended membrane
Heparinized SMA-copolymer
blended membrane

Figure 2

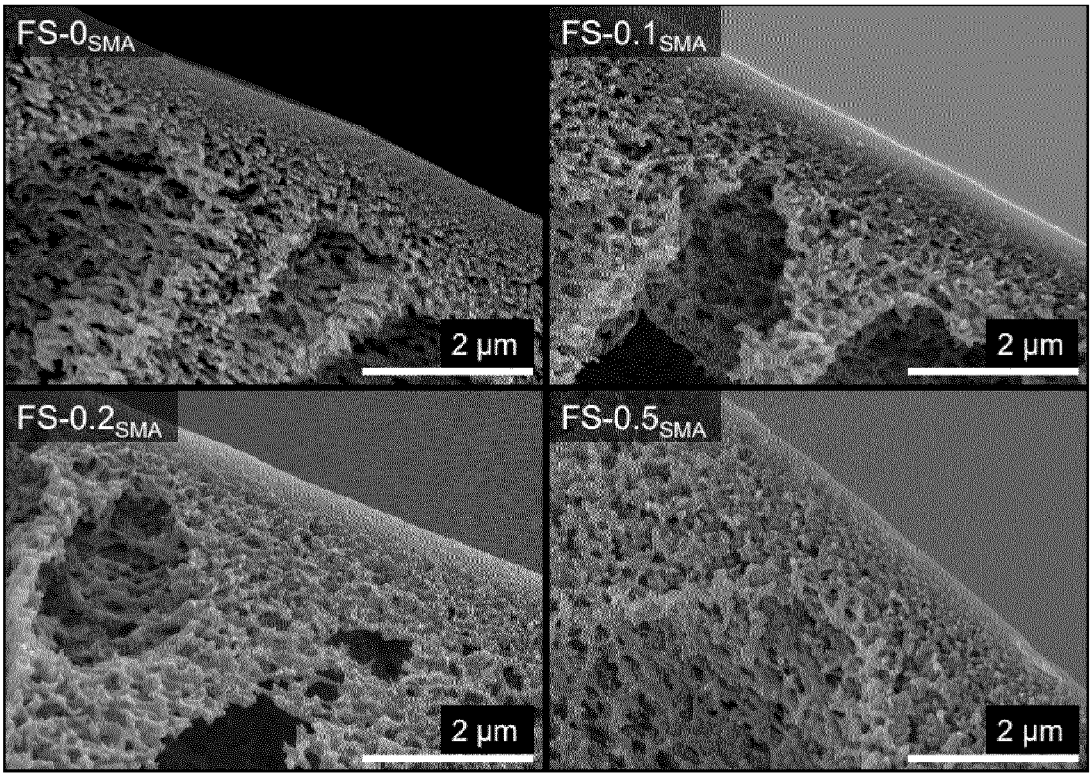


Figure 3

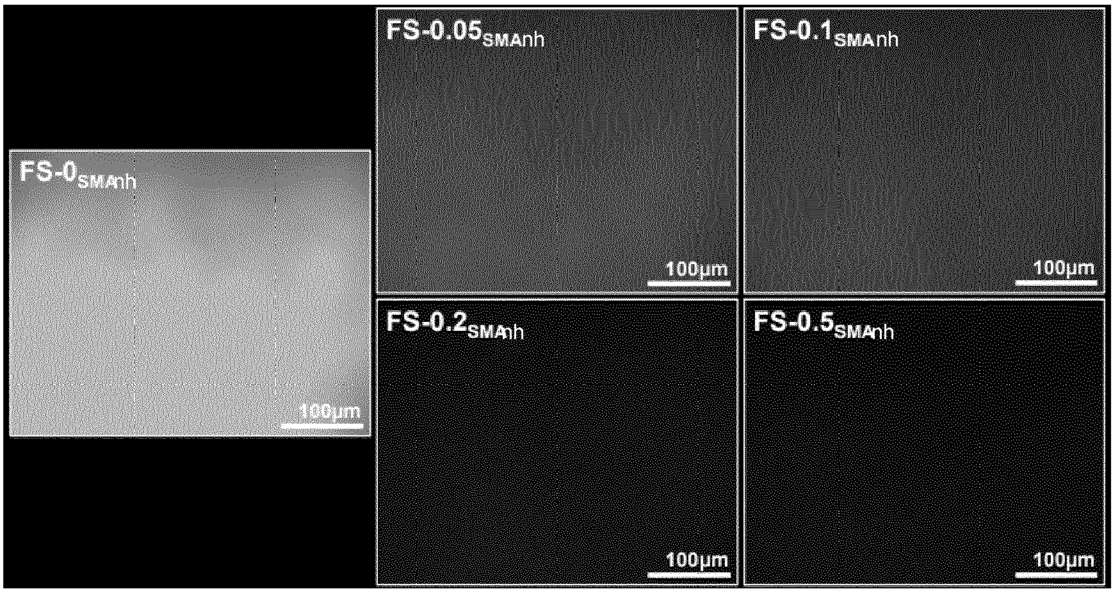
FS-0SMAnh
100µm
FS-0.05SMAnh
100µm
FS-0.1SMAnh
100µm
FS-0.2SMAnh
100µm
FS-0.5SMAnh
100µm

Figure 4

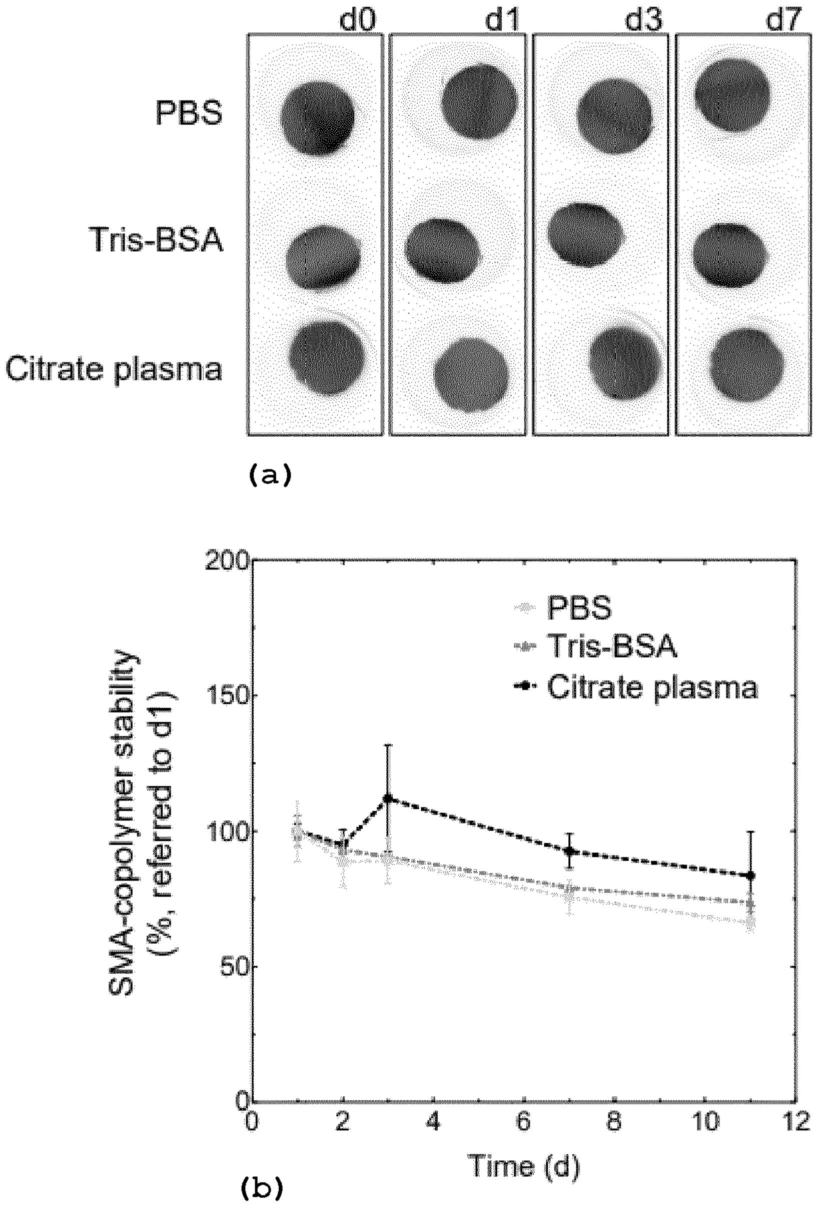
d0
d1
d3
d7
PBS
Tris-BSA
Citrate plasma
(a)
SMA-copolymer stability (%, referred to d1)
Time (d)
PBS
Tris-BSA
Citrate plasma
(b)

Figure 5

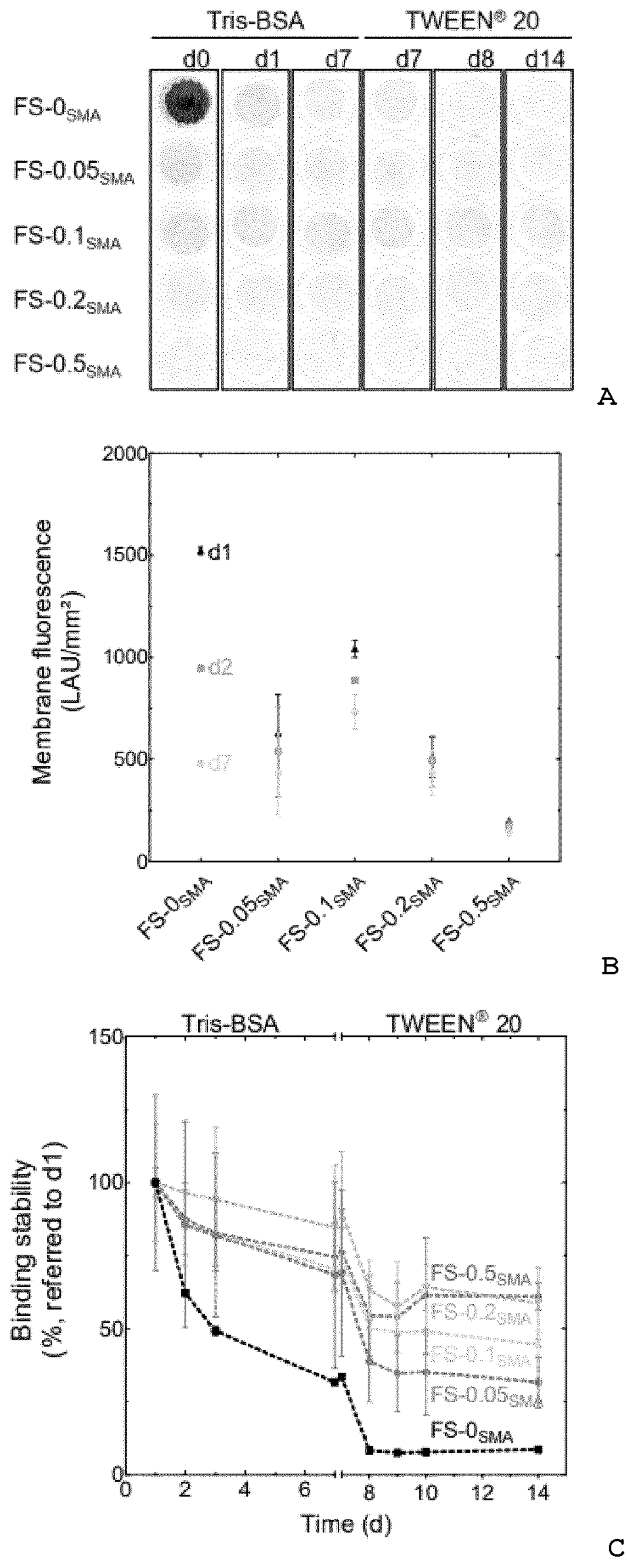
Tris-BSA
TWEEN® 20
d0
d1
d7
d7
d8
d14
FS-0SMA
FS-0.05SMA
FS-0.1SMA
FS-0.2SMA
FS-0.5SMA
A
Membrane fluorescence (LAU/mm²)
2000
1500
1000
500
0
d1
d2
d7
FS-0SMA
FS-0.05SMA
FS-0.1SMA
FS-0.2SMA
FS-0.5SMA
B
Tris-BSA
TWEEN® 20
Binding stability (%, referred to d1)
150
100
50
0
0
2
4
6
8
10
12
14
Time (d)
FS-0.5SMA
FS-0.2SMA
FS-0.1SMA
FS-0.05SMA
FS-0SMA
C

Figure 6

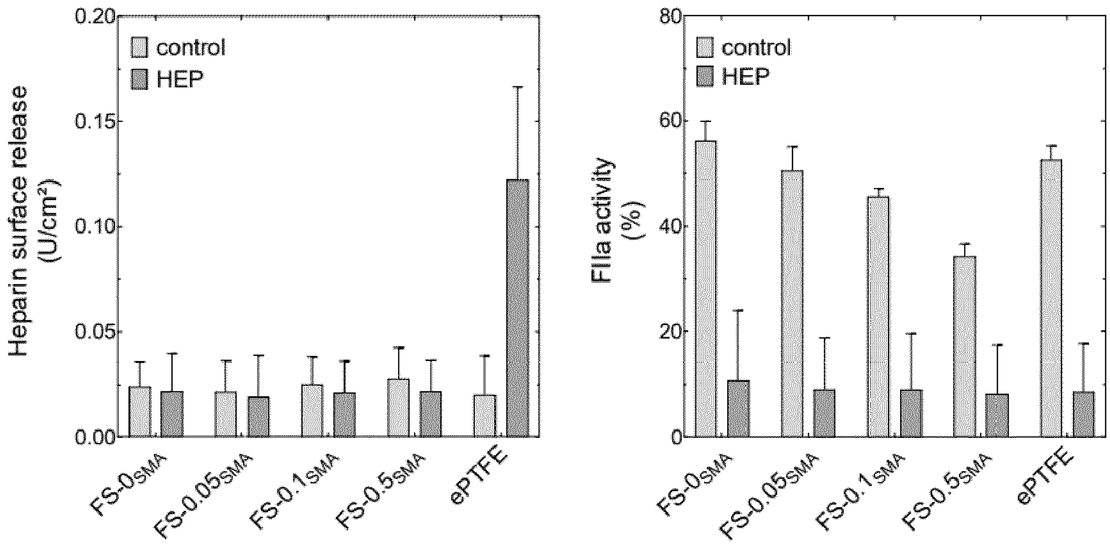


A B

Figure 7

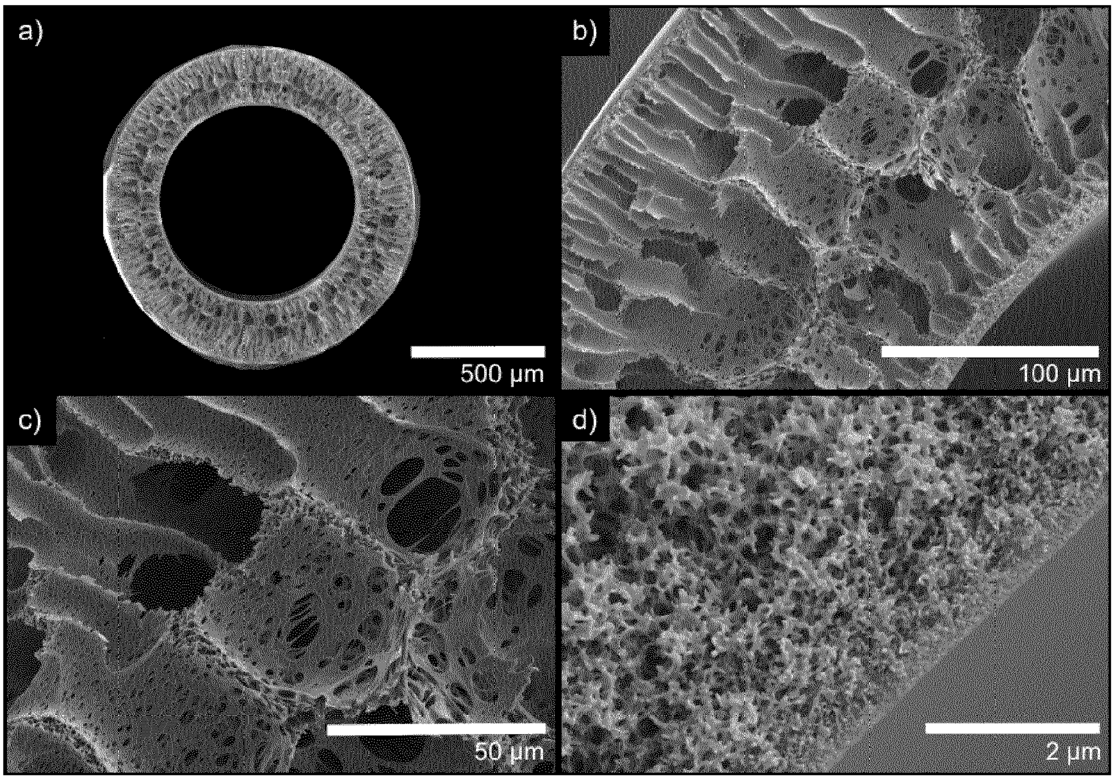


Figure 8

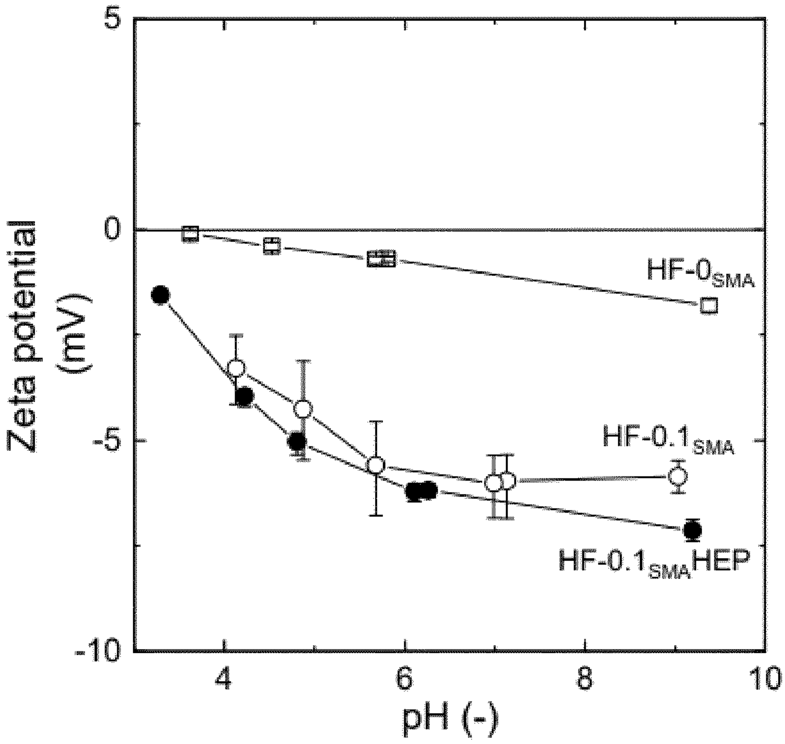
5
0
-5
-10
Zeta potential (mV)
4
6
8
10
pH (-)
HF-0SMA
HF-0.1SMA
HF-0.1SMAHEP

Figure 9

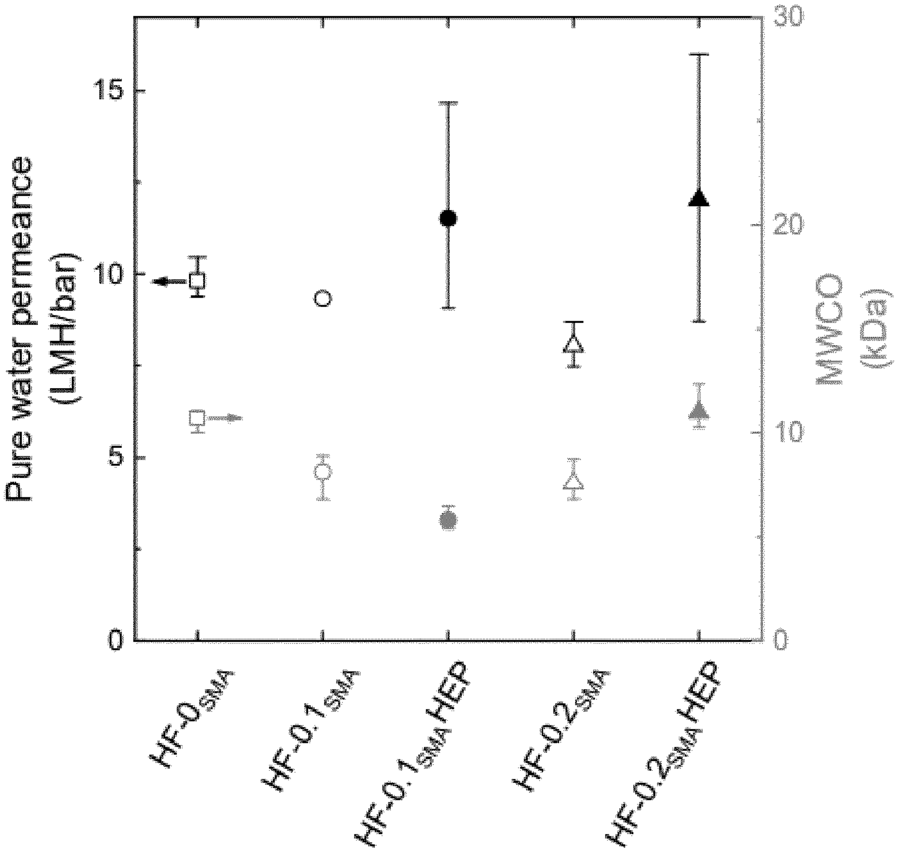


Figure 10

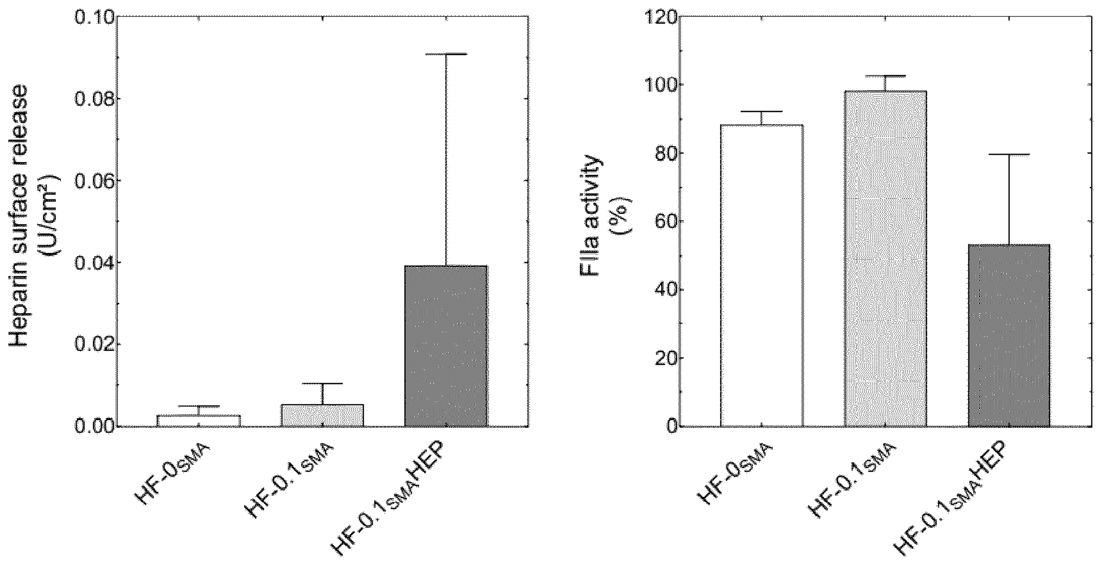


A

B

Figure 11

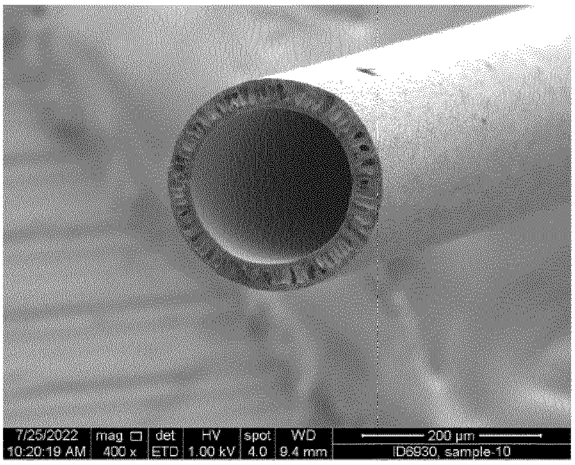


A

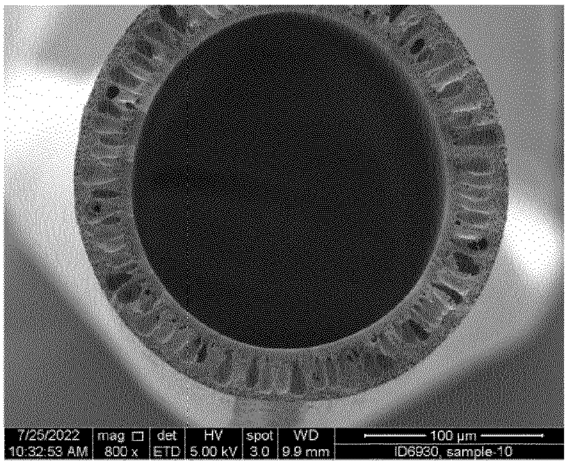


B

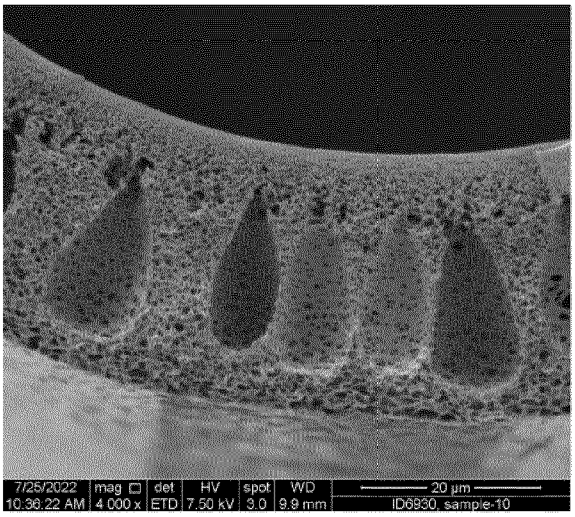


C

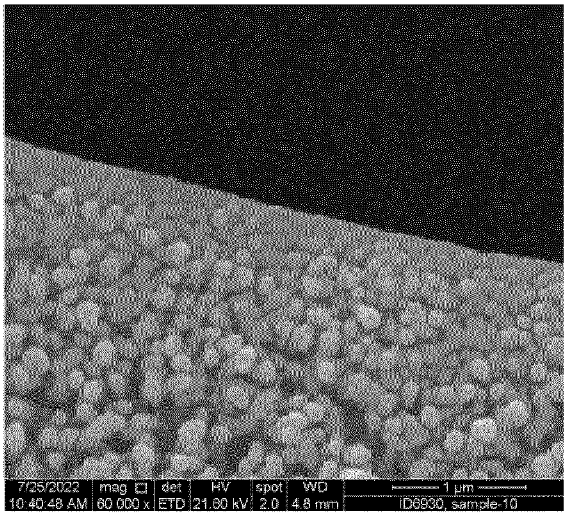


D

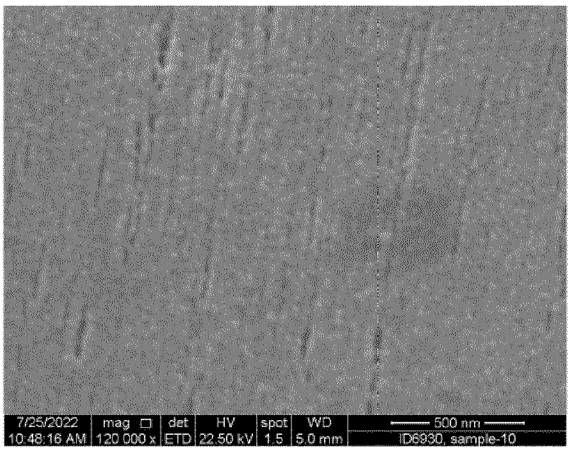


E

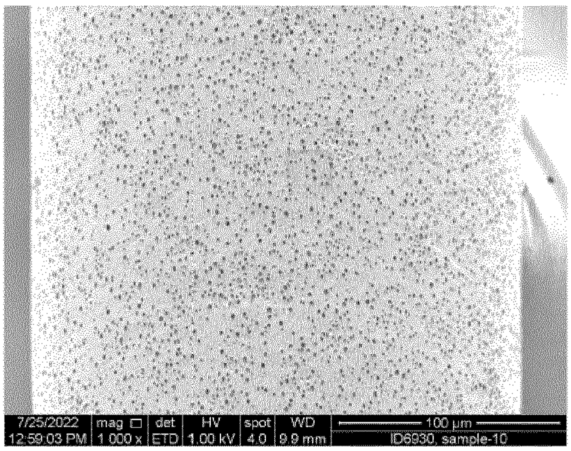


F

Figure 12

Europäisches Patentamt
European Patent Office
Office européen des brevets

# EUROPEAN SEARCH REPORT

Application Number
EP 23 18 7344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 923 085 A (NINGBO YUFENG NEW MATERIAL TECHNOLOGY CO LTD) 23 September 2015 (2015-09-23) * example 8 * ----- | 1-3, 6-11,16 | INV. B01D67/00 B01D69/02 B01D69/08 B01D69/14 B01D71/28 B01D71/40 B01D71/68 |
| X | CN 106 861 437 A (UNIV TIANJIN) 20 June 2017 (2017-06-20) * example 1 * ----- | 1-3, 6-11,16, 18 | |
| X | ZHU ET AL: "Improved protein-adsorption resistance of polyethersulfone membranes via surface segregation of ultrahigh molecular weight poly(styrene-alt-maleic anhydride)", COLLOIDS AND SURFACES B: BIOINTERFACES, ELSEVIER AMSTERDAM, NL, vol. 57, no. 2, 1 May 2007 (2007-05-01), pages 189-197, XP022053577, ISSN: 0927-7765, DOI: 10.1016/J.COLSURFB.2007.01.021 * abstract; table 2 * * Experimental * * Introduction (right column) * ----- | 1-3, 6-11,16, 18 | TECHNICAL FIELDS SEARCHED (IPC) B01D |
| X | WEI XIUZHEN ET AL: "Preparation and improvement anti-fouling property and biocompatibility of polyethersulfone membrane by blending comb-like amphiphilic copolymer", JOURNAL OF POROUS MATERIALS, SPRINGER US, NEW YORK, vol. 21, no. 5, 22 April 2014 (2014-04-22), pages 589-599, XP035386290, ISSN: 1380-2224, DOI: 10.1007/S10934-014-9805-8 [retrieved on 2014-04-22] * abstract * ----- | 1-3, 6-11,16, 18 | |

~~The present search report has been drawn up for all claims~~

1

| Place of search | Date of completion of the search | Examiner |
|---|---|---|
| The Hague | 21 September 2023 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 23 18 7344

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2, 3, 6, 9-11(completely); 1, 7, 8, 16, 18(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 23 18 7344

The Search Division considers that the present European patent application does not comply with the requirements of unity of invention and relates to several inventions or groups of inventions, namely:

**1. claims: 2, 3, 6, 9-11(completely); 1, 7, 8, 16, 18(partially)**

A membrane made from a blend of polysulfone (PS)/ polyethersulfone (PES)/ polyarylethersulfone (PAES) and polyvinylpyrrolidone (PVP) and styrene-maleic anhydride (SMA) copolymers
wherein a specific composition is used for the blend
(not affecting the membrane structure (compared to known PS-PVP membranes, see p. 73 line 11) - providing a membrane with SMA while maintaining porous structure)

---

**2-4. claims: 4, 5, 12-15, 17(completely); 1, 7, 8, 16, 18(partially)**

A membrane made from a blend of polysulfone (PS)/ polyethersulfone (PES)/ polyarylethersulfone (PAES) and polyvinylpyrrolidone (PVP) and styrene-maleic anhydride (SMA) copolymers
wherein the membrane further comprises the following features with the respective technical effects
- 2. amine bearing group - potential to modify the performance, hemocompatibility, antithrombogenicity and/or selectivity (p. 9 line 29 ff) - provide a membrane having the respective technical effect (there is the risk of cascading non-unity)
- 3. functionalization of membrane with heparin/anti-coagulant - reducing coagulation - providing a membrane having improved hemocompatibility
- 4. functionalization with any compound (see group 2)

---

## ANNEX TO THE EUROPEAN SEARCH REPORT ON EUROPEAN PATENT APPLICATION NO. EP 23 18 7344

This annex lists the patent family members relating to the patent documents cited in the above-mentioned European search report. The members are as contained in the European Patent Office EDP file on
The European Patent Office is in no way liable for these particulars which are merely given for the purpose of information.

21-09-2023

| Patent document cited in search report | Publication date | Patent family member(s) | Publication date |
|---|---|---|---|
| CN 104923085 A | 23-09-2015 | NONE | |
| CN 106861437 A | 20-06-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2113298 B1
- US 10238785 B2
- EP 3102314 A1
- EP 3102312 A1
- WO 2012116048 A1
- US 11154820 B2


### Non-patent literature cited in the description


- **ZHAI et al.** Fouling resistance of 3- [[3-(trimethoxysilane)-propyl] amino] propane-1-sulfonic acid zwitterion modified poly (vinylidene fluoride) membranes. *Separation and Purification Technology*, 2020, vol. 239, 11658
- **MENNE et al.** Regenerable polymer/ceramic hybrid nanofiltration membrane based on polyelectrolyte assembly by layer-by-layer technique. *Journal of Membrane Science*, 2016, vol. 520, 924-932
- **EMONDS et al.** Chemistry in a spinneret-formation of hollow fiber membranes 618 with a cross-linked polyelectrolyte separation layer. *Journal of Membrane Science*, 2020, vol. 612, 118325
- **ROSE et al.** Chemistry in a spinneret - polydopamine functionalized hollow fiber membranes. *Journal of Membrane Science*, 2022, vol. 648, 120324
- **SUSANTO et al.** Preparation of low-fouling polyethersulfone ultrafiltration membranes by incorporating high-molecular-weight chitosan with the help of a surfactant. *South African Journal of Chemical Engineering*, 2020, vol. 33, 133-140
- **ROSE et al.** Single-step chitosan functionalized membranes for heparinization. *Journal of Membrane Science*, 2022, vol. 655, 120567
- **ATHIRA et al.** Preparation and characterization of porous polyethersulfone (pes) membranes with improved biocompatibility by blending sulfonated polyethersulfone (SPES) and cellulose acetate (CA) - a comparative study. *Materials Today Communications*, 2020, vol. 25, 101544
- **RULAND et al.** Amphiphilic copolymers for versatile, facile, and in situ tunable surface biofunctionalization. *Adv. Mater.*, 2021, vol. 33 (42), e2102489
- **MAHDAVI et al.** An efficient nanofiltration membrane based on blending of polyethersulfone with modified (styrene/maleic anhydride) copolymer. *Journal of the Iranian Chemical Society*, 2016, vol. 13 (5), 873-880
- **DONG et al.** Tailoring the dual role of styrene-maleic anhydride copolymer in the fabrication of polysulfone ultrafiltration membranes: Acting as a pore former and amphiphilic surface modifier. *Separation and Purification Technology*, 2022, vol. 283, 120219
- **CHEN et al.** Enhanced performances of chlorinated polyvinyl chloride (CPVC) ultrafiltration membranes by styrene-maleic anhydride copolymer. *Separation and Purification Technology*, 2021, vol. 258, 118043
- **BONOMINI et al.** Biocompatibility of Surface-Modified Membranes for Chronic Hemodialysis Therapy. *Biomedicines*, 2022, vol. 10, 844
- Nonthrombogenic treatments and strategies. **SEFTON** ; **GORBET**. Biomaterials Science. Academic Press, 2020, 515-537
- **SHAN et al.** Recent advances in heparinization of polymeric membranes for enhanced continuous blood purification. *Journal of Materials Chemistry*, 2020, vol. B8 (5), 878-894
- **WANG et al.** Hemocompatibility and oxygenation performance of polysulfone membranes grafted with polyethylene glycol and heparin by plasma-induced surface modification. *Journal of Biomedical Materials Research Part B: Applied Biomaterials*, 2017, vol. 105 (7), 1737-174
- **KALEEKKAL**. Heparin immobilized graphene oxide in polyetherimide membranes for hemodialysis with enhanced hemocompatibility and removal of uremic toxins. *Journal of Membrane Science*, 2021, vol. 623, 119068
- **DROZD et al.** Chitosan/heparin layer-by-layer coatings for improving thromboresistance of polyurethane. *Surfaces and Interfaces*, 2022, vol. 28, 101674

- In vitro hemocompatibility of albumin-heparin multilayer coatings on polyethersulfone prepared by the layer-by-layer technique. **SPERLING et al.** Journal of Biomedical Materials Research Part A: An Official Journal of The Society for Biomaterials. The Japanese Society for Biomaterials, and The Australian Society for Biomaterials and the Korean Society for Biomaterials, 2006, vol. 76, 681-689
- **GAO et al.** Preparation and evaluation of heparin-immobilized poly(lactic acid) (PLA) membrane for hemodialysis. *Journal of Membrane Science*, 2014, vol. 452, 390-399
- **KESSLER et al.** Heparin-grafted dialysis membrane allows minimal systemic anticoagulation in regular hemodialysis patients: A prospective proof-of-concept study. *Hemodialysis International*, 2012, vol. 17 (2), 282-29
- **HOFFMANN et al.** A new method for covalent coupling of heparin and other glycosaminoglycans to substances containing primary amino groups. *Carbohydrate Research*, 1983, vol. 117, 328-331
- **LARM et al.** A new non-thrombogenic surface prepared by selective covalent binding of heparin via a modified reducing terminal residue. *Biomaterials, Medical Devices, and Artificial Organs*, 1983, vol. 11 (2-3), 161-173
- **PALANZO et al.** Effect of carmeda BioActive surface coating versus trillium biopassive surface coating of the oxygenator on circulating platelet count drop during cardiopulmonary bypass. *Perfusion*, vol. 16 (4), 279-283
- **DÖRR et al.** The styrene-maleic acid copolymer: a versatile tool in membrane research. *Eur Biophys J.*, 2016, vol. 45, 3-21
- **BOSCHETTI et al.** Extended characterization of a new class of membranes for blood purification: The high cut-off membranes. *Int J Artif Organs*, 2013, vol. 36 (7), 455-463
- **WANG et al.** Control of the heparosan n-deacetylation leads to an improved bioengineered heparin. *Applied Microbiology and Biotechnology*, 2011, vol. 91 (1), 91-99
- **ROSE et al.** Chemistry in a spinneret-polydopamine functionalized hollow fiber membranes. *Journal of Membrane Science*, 2022, vol. 648, 120324
- **LEEMAN et al.** Proteins and antibodies in serum, plasma, and whole blood-size characterization using asymmetrical flow field-flow fractionation (AF4). *Analytical and Bioanalytical Chemistry*, 2018, vol. 410 (20), 4867-4873
- **POMPE et al.** Maleic anydride copolymers - a versatile platform for molecular biosurface engineering. *Biomacromolecules*, 2003, vol. 4 (4), 1072-1079
- **KERWIN**. Polysorbates 20 and 80 used in the formulation of protein biotherapeutics: structure and degradation pathways. *J. Pharm. Sci.*, 2008, vol. 97 (8), 2924-2935
- **FRY et al.** Synthesis and anticoagulant activity of heparin immobilized ''end-on'' to polystyrene microspheres coated with end-group activated polyethylene oxide. *Journal of Biomedical Materials Research Part B: Applied Biomaterials*, 2010, https://doi.org/10.1002/jbm.b.31640
- **OSMOND et al.** Protein-heparin interactions measured by BIAcore 2000 are affected by the method of heparin immobilization. *Analytical Biochemistry*, 2002, vol. 310 (2), 199-207
- **SHRIVER et al.** Cleavage of the antithrombin III binding site in heparin by heparinases and its implication in the generation of low molecular weight heparin. *Proceedings of the National Academy of Sciences*, 2000, vol. 97 (19), 10365-10370